(19) Europäisches Patentamt
European Patent Office
Office européen des brevets

(11) **EP 2 560 330 A2**

(12) **EUROPÄISCHE PATENTANMELDUNG**

(43) Veröffentlichungstag:
**20.02.2013 Patentblatt 2013/08**

(51) Int Cl.:
***H04L 12/58*** *(2006.01)*

(21) Anmeldenummer: **12193004.4**

(22) Anmeldetag: **04.04.2006**

(84) Benannte Vertragsstaaten:
**DE FR**

(30) Priorität: **04.04.2005 DE 102005015385**

(62) Dokumentnummer(n) der früheren Anmeldung(en) nach Art. 76 EPÜ:
**06722749.6 / 1 867 182**

(71) Anmelder: **Intel Mobile Communications GmbH**
**85579 Neubiberg (DE)**

(72) Erfinder:
- **Choi, Hyung-Nam**
  **22117 Hamburg (DE)**

- **Eckert, Michael**
  **38122 Braunschweig (DE)**
- **Schmidt, Andreas**
  **38124 Braunschweig (DE)**

(74) Vertreter: **Viering, Jentschura & Partner**
**Am Brauhaus 8**
**01099 Dresden (DE)**

Bemerkungen:
Diese Anmeldung ist am 16-11-2012 als Teilanmeldung zu der unter INID-Code 62 erwähnten Anmeldung eingereicht worden.

(54) **Umleiten einer Multimedianachricht durch eine Multimedianachricht-Relaiseinrichtung in Abhängigkeit einer Umleitungs-anforderungsnachricht**

(57) Abhängig von einer empfangenen Umleitungs-Anforderungsnachricht, welche von einem Mobilfunk-Kommunikationsendgerät gesendet wurde und mit der eine Umleitung der mindestens einen Multimedianachricht an eine in der Umleitungs-Anforderungsnachricht angegebene Umleitungsadresse beantragt wird, wird eine bei der Multimedianachricht-Relaiseinrichtung eingehende und an das Mobilfunk-Kommunikationsendgerät adressierte Multimedianachricht an die Umleitungsadresse umgeleitet.

FIG 5

EP 2 560 330 A2

**Beschreibung**

Die Erfindung betrifft Verfahren zum Umleiten mindestens einer Multimedianachricht in einem Mobilfunk-Kommunikationsnetzwerk, Multimedianachricht-Relaiseinrichtungen, eine Zentral-Mobilfunk-Servereinheit sowie ein Mobilfunk-Kommunikationsendgerät-Speicherelement.

Ein Mobilfunksystem, welches beispielsweise gemäß dem GSM-Kommunikationsstandard (GSM: **G**lobal **Sy**stem for **M**obile Communications) oder gemäß dem UMTS-Kommunikationsstandard (UMTS: **U**niversal **M**obile **T**elecommunication **S**ystem) ausgebildet ist, bietet üblicherweise die Möglichkeit, die Funktionalität bzw. den Dienst von Weiterleitungen (englisch: diversions) für eingehende Sprach-Kommunikationsverbindungen und Daten-Kommunikationsverbindungen einzurichten. So kann beispielsweise ein Mobilfunkteilnehmer temporär oder dauerhaft eingehende Anrufe an seine Mailbox (Anrufbeantworter) oder eine vorgebbare Festnetz-Telefonnummer weiterleiten. Eine derartige Weiterleitung kann auch an vorgebbare bestimmte Bedingungen geknüpft sein. Beispielsweise kann eine Weiterleitung unter der Bedingung vorgesehen sein, dass das angerufene Kommunikationsendgerät besetzt ist ("Umleitung falls besetzt") oder für den Fall vorgesehen sein, dass das Mobilfunk-Kommunikationsendgerät in dem Bereich, in dem es sich zu dem Zeitpunkt des eingehenden Anrufs befindet, keine Netzverbindung hat ("Umleitung falls keine Netzabdeckung").

Die Verwaltung der so genannten bedingten Rufumleitungen und der so genannten unbedingten Rufumleitungen erfolgt in einem GSM-Mobilfunk-Kommunikationsnetzwerk wie auch in einem UMTS-Mobilfunk-Netzwerk mittels **U**nstructured **S**upplementary **S**ervices **D**ata (USSD).

Unter USSD ist ein Übermittlungsdienst für ein GSM-Kommunikationsnetz zu verstehen, der Zusatzdienste des GSM-Kommunikationsnetz mittels der GSM-Signalisierung steuerbar macht und eine einfachere Nutzung von Mobilfunk-Zusatzdiensten ermöglicht.

USSD-Steuercodes können von einem Mobilfunkteilnehmer entweder direkt über die Tastatur eingegeben werden, falls dieser die üblicherweise kryptischen Codes, die hierfür erforderlich sind, beherrscht, oder über entsprechende Menueinträge ausgewählt werden, die das Mobilfunk-Kommunikationsendgerät in manchen Fällen dem Mobilfunkteilnehmer in für ihn lesbarer Form darstellt und anbietet. In beiden Fällen ist das Ergebnis das gleiche: Die USSD-Steuercodes werden über die GSM/UMTS-Signalisierungskanäle von dem Mobilfunk-Kommunikationsendgerät an das Mobilfunk-Kommunikationsnetzwerk (oder umgekehrt) übermittelt. Die Netzwerkeinheit, die USSD-Steuercodes im Netzwerk auswertet, ist das **H**ome **L**ocation **R**egister (HLR).

USSD-Steuercodes sind beispielsweise in [1] und [2] definiert und können sowohl während (in diesem Fall bezeichnet auch als USSD call related) als auch unabhängig (in diesem Fall auch bezeichnet als USSD non-call related) von einer bestehenden Kommunikationsverbindung übertragen werden. Die Datenraten betragen maximal 1000 Bit pro Sekunde (bei USSD non-call related) und maximal 600 Bit pro Sekunde (bei USSD call related). Weitere bekannte Anwendungsbeispiele für USSD (non-call related) neben dem Einrichten von Rufumleitungen sind beispielsweise die CLIP-Funktionen (**C**alling **L**ine **I**dentification **P**resentation) oder die CLIR-Funktionen (**C**alling **L**ine **I**dentification **R**estriction).

Neben der Sprachtelefonie werden in einem heutigen Mobilfunksystem auch ein Kurznachrichten-Dienst (**S**hort **M**essage **S**ervice, SMS), d.h. ein Dienst zum mobilen Versenden und Empfangen von kurzen Textnachrichten sowie ein Multimedianachrichten-Dienst (**M**ultimedia **M**essaging **S**ervice, MMS), d.h. ein Dienst zum Versenden und Empfangen von umfangreichen Nachrichten mit multimedialen Inhalten unter Verwendung von Mobilfunk, realisiert.

Gemäß dem Stand der Technik ist es nicht ohne weiteres möglich, eine eingerichtete Umleitung für eine Sprach-Kommunikationsverbindung und eine Daten-Kommunikationsverbindung automatisch auf SMS-Nachrichten und MMS-Nachrichten anzuwenden. Die Umleitung für eine SMS-Nachricht könnte unter Verwendung von USSD realisiert werden, indem die bekannten USSD-Steuercodes entsprechend erweitert und in der zentralen SMS-Verarbeitungseinheit (SMS Center, SMSC) in dem Mobilfunk-Kommunikationsnetzwerk (Kernnetzwerk, Core Network, CN) entsprechend ausgewertet werden.

Dies gilt jedoch nicht für eine Multimedianachricht (MMS-Nachricht). Dies ist insbesondere darauf zurückzuführen, dass der MMS-Dienstleistungsanbieter in der Regel nicht mit dem Mobilfunk-Kommunikationsnetzbetreiber identisch ist und seine Kommunikationsnetzwerkkomponente, darunter beispielsweise die MMS-Relay/Servereinheit, häufig außerhalb des Mobilfunk-Kommunikationsnetzwerks liegt. Aus diesem Grund muss der Austausch von Steuerbefehlen zum Zwecke des Einrichtens und Verwaltens von Umleitungen in anderer Form erfolgen.

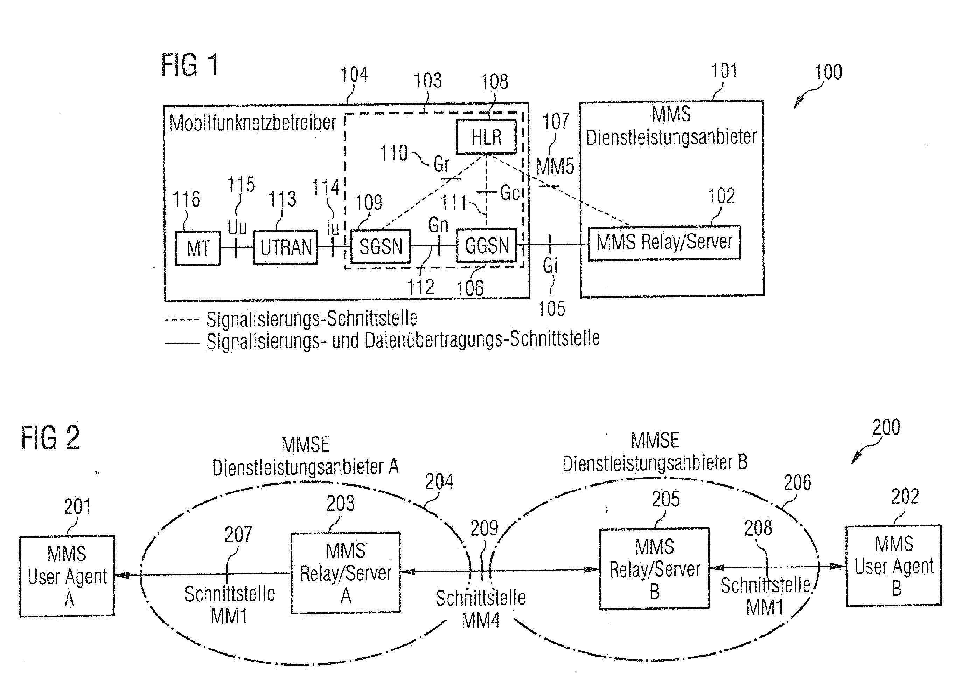

Zur Verdeutlichung dieses Problems sind in **Fig.1** in einem Blockdiagramm 100 die Anbindung eines MMS-Dienstleistungsanbieters 101 mit einer MMS-Relay/Servereinheit 102 an das Kernnetzwerk 103 eines Mobilfunk-Kommunikationsnetzbetreibers 104 über die UMTS-Kommunikationsstandard-konformen Schnittstellen Gi 105 zwischen der MMS-Relay/Servereinheit 102 und dem **G**ateway **G**PRS **S**upport **N**ode (GGSN) 106 und die Schnittstelle MM5 107 zwischen der MMS-Relay/Servereinheit 102 und dem Home Location Register 108 (HLR) gezeigt. Ferner zeigt Fig.1 die Verknüpfung des HLR 108 mit dem **S**erving **G**PRS **S**upport **N**ode (SGSN) 109 mittels einer weiteren Schnittstelle $G_r$ 110, eine Verbindung zwischen dem HLR 108 und dem GGSN 106 mittels einer Schnittstelle $G_c$ 111 sowie eine Kommunikationsverbindung zwischen dem GGSN 106 und dem SGSN 109 mittels einer weiteren Schnittstelle G$_n$ 112. Ferner sind die Verbindung zwischen dem Kernnetzwerk 103 und dem UMTS-Funkzugangsnetzwerk (UTRAN, **U**MTS **T**errestrial **R**adio **A**ccess **N**etwork) mittels einer Schnittstelle I$_u$ 114 und beispielhaft eine Luftschnittstelle 115 U$_u$ zwischen dem UTRAN 113 und einem Mobilfunk-Kommunikationsendgerät 116, welches sich in dem Versorgungsbereich des UTRAN 113 befindet, dargestellt.

USSD-Steuercodes können gemäß dem Stand der Technik nicht über die in Fig.1 dargestellten Schnittstellen Gi 105 und MM5 107 von dem Mobilfunk-Kommunikationsnetzbetreiber 104 an den MMS-Dienstleistungsanbieter 101 weitergeleitet werden.

USSD-Steuercodes sind in [1] und [2] definiert.

Ferner sind Grundlagen über den Multimedianachrichten-Dienst (**M**ultimedia **M**essaging **S**ervice, MMS) in [3] und [4] beschrieben.

Aus [5] sind unterschiedliche Einträge in einer UICC-Dienst-Tabelle (**U**niversal **I**ntegrated **C**ircuits **C**ard-Service-Tabelle) bekannt.

Weiterhin sind in [6] Multimedianachrichten-Dienst-Protokolldateneinheiten (MMS-PDUs) gemäß der Definition der **O**pen **M**obile **A**lliance (OMA) beschrieben.

[7] offenbart das **W**ireless **S**ession **P**rotocol (WSP).

Das so genannte **H**ypertext **T**ransfer **P**rotocol (HTTP) ist beispielsweise in [8] beschrieben.

In [9] sind Beispiele von Kopffeldern für eine Standard-Protokolldateneinheit dargestellt.

Ferner ist es aus [10] bekannt, eine Multimedianachricht umzuleiten, indem von einer MMS-Relay/Servereinheit bei Erhalt einer Multimedianachricht bei dem HLR nachgefragt wird, ob eine Umleitung für die jeweilige Multimedianachricht vorgesehen ist und, wenn dies der Fall ist, die Umleitungsadresse von dem HLR erfragt wird. Nach Übertragen der Umleitungsadresse von dem HLR an die MMS-Relay/Servereinheit wird die Multimedianachricht an den mit der Umleitungsadresse gekennzeichneten Umleitungsempfänger umgeleitet.

Der Erfindung liegt das Problem zugrunde, auf einfache und damit kostengünstige Weise einen Dienst zur Umleitung von Multimedianachrichten bereitzustellen.

Das Problem wird durch Verfahren zum Umleiten mindestens einer Multimedianachricht in einem Mobilfunk-Kommunikationsnetzwerk, durch Multimedianachricht-Relaiseinrichtungen, durch eine Zentral-Mobilfunk-Servereinheit sowie durch eine Mobilfunk-Kommunikationsendgerät-Speicherelement mit dem Merkmalen gemäß den unabhängigen Patentansprüchen gelöst.

Gemäß einem Aspekt der Erfindung ist ein Verfahren zum Umleiten mindestens einer Multimedianachricht in einem Mobilfunk-Kommunikationsnetzwerk vorgesehen, bei dem abhängig von einer empfangenen Umleitungs-Anforderungsnachricht, welche von einem Mobilfunk-Kommunikationsendgerät gesendet wurde und mit der eine Umleitung der mindestens einen Multimedianachricht an eine in der Umleitungs-Anforderungsnachricht angegebene Umleitungsadresse beantragt wird, eine bei der Multimedianachricht-Relaiseinrichtung eingehende und an das Mobilfunk-Kommunikationsendgerät adressierte Multimedianachricht an die Umleitungsadresse umgeleitet wird.

Gemäß einem anderen Aspekt der Erfindung ist eine Multimedianachricht-Relaiseinrichtung vorgesehen zum Empfangen und Weiterleiten mindestens einer Multimedianachricht in einem Mobilfunk-Kommunikationsnetzwerk, wobei die Multimedianachricht-Relaiseinrichtung eine Empfängereinheit zum Empfangen einer Umleitungs-Anforderungsnachricht aufweist, wobei die Umleitungs-Anforderungsnachricht von einem Mobilfunk-Kommunikationsendgerät gesendet wurde und mit der eine Umleitung der mindestens einen Multimedianachricht an eine in der Umleitungs-Anforderungsnachricht angegebene Umleitungsadresse beantragt wird. Ferner ist eine UmleitungsPrüfeinheit vorgesehen, die eingerichtet ist zum Überprüfen für eine empfangene Multimedianachricht, ob für das in der Multimedianachricht angegebene Ziel-Mobilfunk-Kommunikationsendgerät eine Umleitungsfunktion aktiviert ist oder nicht. Die Umleitungsprüfeinheit ist ferner eingerichtet derart, dass sie für den Fall, dass die Umleitungsfunktion aktiviert ist, die Multimedianachricht an die in der Umleitungs-Anforderungsnachricht angegebene Umleitungsadresse umleitet. Für den Fall, dass die Umleitungsfunktion deaktiviert ist, wird die jeweilige Multimedianachricht an den in der Multimedianachricht angegebenen Ziel-Mobilfunk-Kommunikationsendgerät weitergeleitet.

Gemäß einem anderen Aspekt der Erfindung ist ein Verfahren zum Umleiten mindestens einer Multimedianachricht in einem Mobilfunk-Kommunikationsnetzwerk vorgesehen, bei dem auf den Empfang einer ersten Umleitungs-Anforderungsnachricht hin, welche von einem Mobilfunk-Kommunikationsendgerät gesendet wurde und mit der eine Umleitung von eingehenden Kommunikationsverbindungs-Anforderungen, sei es eine Sprach-Kommunikationsverbindungs-Anforderung oder eine Daten-Kommunikationsverbindungs-Anforderung, beantragt wird, von einer zentralen Mobilfunk-Servereinheit eine zweite Umleitungs-Anforderungsnachricht gemäß einem Mobilfunk-Format, welches von einer Multimedianachricht-Relaiseinrichtung verarbeitbar ist, gebildet wird. Die zweite Umleitungs-Anforderungsnachricht wird dann von der Zentral-Mobilfunk-Servereinheit an eine entsprechende Multimedianachricht-Relaiseinrichtung übertragen, wobei die zweite Umleitungs-Anforderungsnachricht mindestens eine Angabe der Umleitungsadresse enthält. Abhängig von der zweiten Umleitungs-Anforderungsnachricht wird eine bei der Multimedianachricht-Relaiseinrichtung eingehende und an das Mobilfunk-Kommunikationsendgerät adressierte Multimedianachricht an die Umleitungsadresse umgeleitet.

Gemäß noch einem anderen Aspekt der Erfindung ist ein Verfahren zum Umleiten mindestens einer Multimedianachricht in einem Mobilfunk-Kommunikationsnetzwerk vorgesehen, bei dem auf den Empfang einer ersten Umleitungs-Anforderungsnachricht hin, welche von einem Mobilfunk-Kommunikationsendgerät gesendet wurde und mit der eine Umleitung der mindestens einen Multimedianachricht an eine in der Umleitungs-Anforderungsnachricht angegebene Umleitungsadresse beantragt wird, von einer Multimedianachricht-Relaiseinrichtung eine zweite Umleitungs-Anforderungsnachricht gemäß einem Mobilfunk-Format, welches von einer Zentral-Mobilfunk-Servereinheit verarbeitbar ist, gebildet wird. Die zweite Umleitungs-Anforderungsnachricht wird an die Zentral-Mobilfunk-Servereinheit übertragen, wobei die zweite Umleitungs-Anforderungsnachricht mindestens eine Angabe der Umleitungsadresse enthält. Eine bei der Multimedianachricht-Relaiseinrichtung eingehende und an das Mobilfunk-Kommunikationsendgerät adressierte Multimedianachricht wird an die Umleitungsadresse umgeleitet. Ferner wird eine in der Zentral-Mobilfunk-Servereinheit eingehende Kommunikationsverbindungs-Anforderung, sei es eine Sprach-Kommunikationsverbindungs-Anforderung oder eine Daten-Kommunikationsverbindungs-Anforderung, an die Umleitungsadresse umgeleitet.

Gemäß einem weiteren Aspekt der Erfindung ist eine Zentral-Mobilfunk-Servereinheit vorgesehen mit einer Empfängereinheit zum Empfangen einer ersten Umleitungs-Anforderungsnachricht, welche von einem Mobilfunk-Kommunikationsendgerät versendet wurde und mit der eine Umleitung von eingehenden Kommunikationsverbindungs-Anforderungen, sei es eine Sprach-Kommunikationsverbindungs-Anforderung oder eine Daten-Kommunikationsverbindungs-Anforderung, beantragt wird. Ferner weist die Zentral-Mobilfunk-Servereinheit eine Umwandlungseinheit zum Umwandeln einer ersten Umleitungs-Anforderungsnachricht in eine zweite Umleitungs-Anforderungsnachricht gemäß einem Mobilfunk-Format auf, welches von einer Multimedianachricht-Relaiseinrichtung verarbeitbar ist. Zusätzlich ist in der Zentral-Mobilfunk-Servereinheit eine Sendereinheit vorgesehen zum Senden der zweiten Umleitungs-Anforderungsnachricht an eine Multimedianachricht-Relaiseinrichtung.

Gemäß einem anderen Aspekt der Erfindung ist eine Multimedianachricht-Relaiseinrichtung vorgesehen mit einer Empfängereinheit zum Empfangen einer ersten Umleitungs-Anforderungsnachricht, welche von einem Mobilfunk-Kommunikationsendgerät gesendet wurde und mit der eine Umleitung der mindestens einen Multimedianachricht an eine in der Umleitungs-Anforderungsnachricht angegebene Umleitungsadresse beantragt wird. Ferner ist eine Umwandlungseinheit vorgesehen zum Umwandeln einer ersten Umleitungs-Anforderungsnachricht in eine zweite Umleitungs-Anforderungsnachricht gemäß einem Mobilfunk-Format, welches von einer Zentral-Mobilfunk-Servereinheit verarbeitbar ist sowie eine Sendereinheit zum Senden der zweiten Umleitungs-Anforderungsnachricht an die Zentral-Mobilfunk-Servereinheit.

Auf einem Mobilfunk-Kommunikationsendgerät-Speicherelement sind Umleitungsfunktions-Daten gespeichert, mit denen angegeben wird, ob das jeweilige Mobilfunk-Kommunikationsnetzwerk, in dem das Mobilfunk-Kommunikationsendgerät-Speicherelement enthalten ist, einen Umleitungsdienst, insbesondere hinsichtlich des Zusammenwirkens zwischen dem Mobilfunk-Kommunikationsnetzwerk und dem MMS-Dienstleistungsanbieter, zum Umleiten mindestens einer Multimedianachricht in einem Mobilfunk-Kommunikationsnetzwerk unterstützt oder nicht.

Durch die Erfindung wird anschaulich ein einfacher Protokollmechanismus geschaffen, bei dem einerseits zwischen dem Mobilfunk-Kommunikationsendgerät und einer Multimedianachricht-Relaiseinrichtung, beispielsweise einer MMS-Relay/Servereinheit das Aktivieren und Implementieren einer MMS-Umleitung ermöglicht ist, ohne, wie dies gemäß [10] erforderlich ist, für jede Multimedianachricht das Home Location Register des Mobilfunk-Kommunikationsnetzwerkes kontaktieren zu müssen. Ferner wird ein Zusammenwirken zwischen dem Mobilfunk-Kommunikationsnetzwerk und dem MMS-Dienstanbieter erreicht, wobei auf sehr einfache Weise durch Vorsehen insbesondere der erfindungsgemäßen Protokolldateneinheiten ein Synchronisieren sowohl des Kernnetzwerks des Mobilfunkanbieters und des MMS-Dienstleistungsanbieters hinsichtlich einer gemeinschaftlichen Umleitung sowohl eingehender Sprach-Kommunikationsverbindungs-Anforderungen, Daten-Kommunikations-Verbindungsanforderungen als auch SMS-Nachrichten oder MMS-Nachrichten erreicht wird.

Anschaulich wird der Multimedianachrichten-Dienst (MMS) um die Funktionalität der bedingten Nachrichtenweiterleitung und/oder der unbedingten Nachrichtenweiterleitung (diversion) erweitert, wobei beispielsweise die dynamische Verwaltung der dafür erforderlichen Einstellungen mittels der Umleitungs-Anforderungsnachricht jeweils auf einfache Weise ermöglicht ist.

Gemäß einem anderen Aspekt der Erfindung ist die MMS-Umleitungs-Funktionalität mit der in einem Mobilfunk-Kommunikationsnetzwerk üblichen Rufumleitung verknüpft unter Verwendung insbesondere einer Protokollerweiterung im Rahmen der MM5-Schnittstelle (gemäß 3GPP), so dass ein Nutzer eines Mobilfunk-Kommunikationsendgeräts mit nur einem Befehl und damit endgeräteseitig mit nur einer Nachricht beide Dienste steuern kann und somit dafür sorgen kann, dass sowohl eine MMS als auch ein eingehender Ruf für eine Sprach-Kommunikationsverbindung oder eine Daten-Kommunikationsverbindung auf eine vorgebbare, in der Umleitungsadresse direkt oder indirekt angegebene, Umleitungsadresse umgeleitet werden kann.

Gemäß einem anderen Aspekt der Erfindung werden die für die Funktionalität der bedingten Nachrichtenweiterleitung und/oder der unbedingten Nachrichtenweiterleitung einer Multimedianachricht spezifischen Werte und Einstellungen auf einer Speicherkarte, beispielsweise einer intelligenten Speicherkarte wie etwa einer Smart-Card, abgelegt, anders ausgedrückt, darin gespeichert.

Beispielhafte Ausgestaltungen der Erfindung ergeben sich aus den abhängigen Ansprüchen.

Die im Folgenden beschriebenen Ausgestaltungen der Erfindung betreffen die Verfahren zum Umleiten mindestens einer Multimedianachricht in einem Mobilfunk-Kommunikationsnetzwerk, die Multimedianachricht-Relaiseinrichtung, die Zentral-Mobilfunk-Servereinheit sowie gegebenenfalls das Mobilfunk-Kommunikationsendgerät-Speicherelement.

Die Multimedianachricht-Relaiseinrichtung ist beispielsweise eine Mobilfunk-Multimedianachricht-Relaiseinrichtung

Die Umleitungs-Anforderungsnachricht kann zu Beginn des Verfahrens von dem Mobilfunk-Kommunikationsendgerät an eine Multimedianachricht-Relaiseinrichtung übertragen werden.

Die Multimedianachricht-Relaiseinrichtung ist beispielsweise eine MMS-Relay/Servereinheit.

Die Zentral-Mobilfunk-Servereinheit ist beispielsweise ein Home Location Register (HLR).

Das Mobilfunk-Kommunikationsendgerät sowie die Komponenten des Mobilfunknetzes sind beispielsweise gemäß dem GSM-Kommunikationsstandard und/oder gemäß einem 3GPP-Kommunikationsstandard wie beispielsweise dem GPRS-Kommunikationsstandard, dem EDGE-Kommunikationsstandard oder dem UMTS-Kommunikationsstandard eingerichtet.

Ist das Mobilfunk-Kommunikationsendgerät gemäß dem GSM- oder UMTS-Kommunikationsstandard eingerichtet, so wird beispielsweise die Umleitungs-Anforderungsnachricht von einer User-Agent-Einheit in dem Mobilfunk-Kommunikationsendgerät generiert.

Als Umleitungs-Anforderungsnachricht kann somit eine GSM-Umleitungs-Anforderungsnachricht oder eine 3GPP-Umleitungs-Anforderungsnachricht und dabei beispielsweise eine UMTS-Umleitungs-Anforderungsnachricht verwendet werden, d.h. allgemein jeweils eine Umleitungs-Anforderungsnachricht, die gemäß dem jeweils oben beschriebenen Kommunikationsstandard kodiert ist.

Gemäß dieser Ausgestaltung der Erfindung ist es somit auf einfache Weise ermöglicht, ein Zusammenwirken eines Mobilfunk-Kommunikationsnetzwerkes gemäß einem der oben beschriebenen Kommunikationsstandards mit einem MMS-Dienstleistungsanbieter zu ermöglichen ohne Notwendigkeit, eine spezielle USSD-Signalisierung für MMS-Umleitungen vorzusehen. Damit ist es ermöglicht, dass der MMS-Dienste-Provider ein anderer Anbieter als der Betreiber des Mobilfunk-Kommunikationsnetzwerks sein kann.

Gemäß einer anderen Ausgestaltung der Erfindung ist es vorgesehen, dass von der Multimedianachricht-Relaiseinrichtung auf den Empfang der Umleitungs-Anforderungsnachricht hin eine Umleitungs-Bestätigungsnachricht erzeugt wird, welche von der Multimedianachricht-Relaiseinrichtung an das Mobilfunk-Kommunikationsendgerät übertragen wird.

Mittels der Bestätigung wird sichergestellt, dass dem Mobilfunk-Kommunikationsendgerät mitgeteilt wird, dass einerseits die Umleitungs-Anforderungsnachricht von der Multimedianachricht-Relaiseinrichtung korrekt empfangen wurde und andererseits gegebenenfalls auch signalisiert wird, dass die Multimedianachricht-Relaiseinrichtung in der Lage war, den angeforderten Dienst bereitzustellen und damit die angeforderte Umleitungsfunktionalität zu realisieren bzw. zu aktivieren.

Die Umleitungs-Anforderungsnachricht und/oder die Umleitungs-Bestätigungsnachricht kann jeweils eine Transaktions-Identifikationsangabe enthalten, die beispielsweise in einem Kopffeld einer OMA-MMS-Protokolldateneinheit als X-Mms-Transaction-ID vorgesehen ist.

Gemäß einer anderen Ausgestaltungen der Erfindung ist es vorgesehen, dass in beiden Nachricht jeweils eine Transaktions-Identifikationsangabe, enthalten ist, wobei jeweils die einander zugehörige Umleitungs-Anforderungsnachricht und Umleitungs-Bestätigungsnachricht die gleiche Transaktions-Identifikationsangabe enthalten, wodurch eine einfache Identifikation der beiden einander zugehörigen Nachrichten auf der Seite des Mobilfunk-Kommunikationsendgeräts ermöglicht ist.

In der Umleitungs-Anforderungsnachricht kann zumindest eine der folgenden Informationen enthalten sein:

- eine Angabe des Nachrichten-Typs, und/oder
- eine Angabe einer Multimedianachrichten-Dienst-Schnittstellen-Version, mit der angegeben wird, welche Version der Multimedianachrichten-Dienst-Schnittstellen von dem Mobilfunk-Kommunikationsendgerät unterstützt wird, und/oder
- die Umleitungsadresse, alternativ eine Referenz auf die Umleitungsadresse, allgemein eine die Umleitungsadresse identifizierende Information, und/oder
- eine Angabe von Bedingungen, gemäß denen die Umleitung einer Multimedianachricht durchgeführt werden soll, und/oder
- eine Angabe, ob ein Zusammenwirken des Multimedianachrichten-Dienstes mit Rufeinstellungen des verwendeten Mobilfunk-Kommunikationsnetzwerkes gewünscht wird (und/oder möglich ist).

Mittels der oben beschriebenen Parameter bzw. Informationen in der Umleitungs-Anforderungsnachricht ist eine sehr komfortable und einfache Steuerung einer Umleitung von Multimedianachrichten seitens des Mobilfunk-Kommunikationsendgeräts ermöglicht.

Das Verfahren, bei dem abhängig von einer empfangenen Umleitungs-Anforderungsnachricht eine bei der Multimedianachricht-Relaiseinrichtung eingehende und an das Mobilfunk-Kommunikationsendgerät adressierte Multimedianachricht an die Umleitungsadresse umgeleitet wird, wird beispielsweise im Rahmen der MM1-Schnittstelle gemäß dem 3GPP- bzw. OMA-Mobilfunk-Kommunikationsstandard durchgeführt. Gemäß dieser Ausgestaltung der Erfindung wird durch die sehr einfache Protokollerweiterung im Rahmen der MM1-Schnittstelle das Bereitstellen einer MMS-Umleitung in der Multimedianachricht-Relaiseinrichtung ermöglicht.

Gemäß einer anderen Ausgestaltung der Erfindung ist es vorgesehen, dass von dem Mobilfunk-Kommunikationsendgerät eine Umleitungsansicht-Anforderungsnachricht an die Multimedianachricht-Relaiseinrichtung übertragen wird, wobei mit der Umleitungsansicht-Anforderungsnachricht das Übertragen von eingestellten Umleitungsparametern bei der Multimedianachricht-Relaiseinrichtung von der Multimedianachricht-Relaiseinrichtung zu dem Mobilfunk-Kommunikationsendgerät beantragt wird.

Anders ausgedrückt bedeutet dies, dass mittels dieser zusätzlichen Protokolldateneinheit ermöglicht wird, von der Multimedianachricht-Relaiseinrichtung die Umleitungsparameter, welche mittels beispielsweise durch eine vorangegangene Umleitungs-Anforderungsnachricht gesetzt wurden, an das Mobilfunk-Kommunikationsendgerät übermittelt werden, so dass dieses auf einfache und komfortable Weise die Einstellungen mitgeteilt bekommt und somit diese Informationen wiederum in geeigneter Weise weiterverarbeiten kann oder dem Teilnehmer darstellen kann.

Gemäß noch einer anderen Ausgestaltung der Erfindung ist es vorgesehen, dass von der Multimedianachricht-Relaiseinrichtung auf den Empfang der Umleitungsansicht-Anforderungsnachricht hin eine Umleitungsansicht-Bestätigungsnachricht erzeugt wird, welche von der Multimedianachricht-Relaiseinrichtung an das Mobilfunk-Kommunikationsendgerät übertragen wird.

Die Umleitungsansicht-Anforderungsnachricht und die Umleitungsansicht-Bestätigungsnachricht, welche einander zugehörig sind, weil sie beispielsweise die gleiche Umleitung für eine jeweilige Multimedianachricht oder eine Mehrzahl von Multimedianachrichten an die gleiche Zieladresse gerichtet betreffen, können die gleiche Transaktions-Identifikationsangabe enthalten.

Gemäß einer anderen Ausgestaltung der Erfindung kann es vorgesehen sein, dass die Multimedianachricht-Relaiseinrichtung die Umleitung der eingehenden Multimedianachricht abhängig von Daten in der ersten, vom Mobilfunk-Kommunikationsendgerät enthaltenen, oder zweiten, von der Zentral-Mobilfunk-Servereinheit erhaltenen Umleitungs-Anforderungsnachricht durchführt, wobei spezifische Regeln berücksichtigt werden, beispielsweise könnten aus den in der Umleitungs-Anforderungsnachricht enthaltenen Steuerungsdaten bzw. Parametern für die Umleitung MMS-spezifischere und detaillierte Umleitungsregeln unter Verwendung von in der Multimedianachricht-Relaiseinrichtung gespeicherten MMS-spezifischen Umleitungsregeln abgeleitet werden. So kann es beispielsweise vorgesehen sein, in unterschiedlicher Art eine Multimedianachricht abhängig von der Größe einer Multimedianachricht oder abhängig von den in einer Multimedianachricht enthaltenen Dateitypen bzw. Dateiformaten, an unterschiedliche Umleitungsadressen umzuleiten oder die jeweiligen Teile der Multimedianachricht in unterschiedlicher Weise zu verarbeiten, gegebenenfalls auch unterschiedliche Teile der Multimedianachricht an unterschiedliche Umleitungsadressen umzuleiten. Beispielsweise kann es vorgesehen sein, dass das Weiterleiten von bestimmten Dateitypen bzw. Dateiformaten an eine Umleitungsadresse oder auch an die Zieladresse unterdrückt wird. Dies ist insbesondere dann sinnvoll, wenn das mit der Zieladresse oder mit der Umleitungsadresse adressierte Kommunikationsendgerät Dateien eines oder mehrerer vorgegebener Typen oder Formate nicht zu verarbeiten in der Lage ist.

Ferner kann die Zentral-Mobilfunk-Servereinheit die Umleitung der eingehenden Kommunikationsverbindungs-Anforderungen abhängig von Daten in der zweiten Umleitungs-Anforderungsnachricht durchführen, wobei GSM-/UMTS-Telefoniespezifische Regeln berücksichtigt werden.

Als Zentral-Mobilfunk-Servereinheit wird beispielsweise die Home Location Register-Einheit des verwendeten Mobilfunk-Kommunikationsnetzwerkes verwendet. Diese Ausgestaltung führt insbesondere zu dem Vorteil, dass die gesamten Informationen über die jeweiligen Mobilfunk-Teilnehmer und deren Mobilfunk-Kommunikationsendgeräte dort gemeinsam gespeichert sind und somit eine Gesamtübersicht über die Kundendaten auf einfache Weise erhalten werden kann und damit eine zentrale Steuerung der jeweiligen Umleitungen noch einfacher ermöglicht ist.

Vor dem Einstellen der Umleitungsfunktion kann eine Plausibilitätsprüfung dahingehend durchgeführt werden, ob die in der Umleitungs-Anforderungsnachricht angegebenen Umleitungsparameter hinsichtlich vorgegebener Plausibilitätsregeln korrekt sind. Die Plausibilitätsprüfung kann in der Zentral-Mobilfunk-Servereinheit und/oder in der Multimedianachricht-Relaiseinrichtung vorgesehen sein.

Das Mobilfunk-Kommunikationsendgerät-Speicherelement kann als Mobilfunk-Kommunikationsendgerät-externe Speicherkarte eingerichtet sein, beispielsweise als Smart-Card und dabei beispielsweise als **S**ubscriber **I**dentity **M**odule (SIM) (beispielsweise gemäß dem GSM-Kommunikationsstandard) oder als Universal Integrated Circuits Card (UICC) (beispielsweise gemäß dem UMTS-Kommunikationsstandard).

Ein Aspekt der Erfindung kann somit darin gesehen werden, dass im Gegensatz zum Stand der Technik, bei dem derzeit keine Umleitungsfunktionalität für Multimedianachrichten existiert, eine einfache und damit kostengünstige Möglichkeit der Integration der Umleitungsfunktionalität in die MMS-Kommunikationsarchitektur bereitgestellt wird, ohne dass eine Adaption der an sich bekannten Umleitungsverfahren für eingehende Sprach-Kommunikationsverbindungen und Daten-Kommunikationsverbindungen, die alle auf USSD-Steuercodes basieren und folglich die GSM/UMTS-Signalisierungskanäle nutzen und damit für die MMS-Kommunikationsarchitektur nicht in Frage kommen (da der MMS-Dienstleistungsanbieter üblicherweise nicht mit dem Mobilfunknetzbetreiber identisch ist und häufig außerhalb des Mobilfunk-Kommunikationsnetzwerks (Core Network) angeordnet ist), erforderlich wird.
Ferner ist auf folgende Aspekte der Erfindung hinzuweisen:

• Durch die oben beschriebenen und im Folgenden näher erläuterten Protokollerweiterungen beispielsweise auf der MM1-Schnittstelle wird das Einschalten/Ausschalten der MMS-Umleitungsfunktionalität und deren dynamische Verwaltung ermöglicht.
• Die Einrichtung und Verwendung der MMS-Diversion-Funktionalität (MMS-Umleitungsfunktionalität) geschieht beispielsweise unter besonderer Berücksichtigung der bei Austausch von elektronischen Nachrichten typischerweise vorkommenden Bedingungen, beispielsweise der Nachrichtengröße der Multimedianachrichten, des Inhalts der Multimedianachrichten, etc., die sich signifikant von den Bedingungen für GSM/UMTS-Rufumleitungen gemäß dem Stand der Technik unterscheiden.
• Durch zusätzliche Protokollerweiterungen auf der MM5-Schnittstelle kann der Abgleich von konventionellen GSM/UMTS-Rufumleitungseinstellungen und den oben und im Folgenden näher erläuterten neuen MMS-Umleitungseinstellungen erreicht werden, so dass der Nutzer mit nur einer Aktion auf seinem Mobilfunk-Kommunikationsendgerät komfortabel und kostengünstig beide Dienste gleichzeitig steuern kann.
• Weiterhin ist darauf hinzuweisen, dass auch eine Speicherung der MMS-Umleitungs-spezifischen Werte und Einstellungen auf einer einem Mobilfunk-Kommunikationsendgerät (mobiles Kommunikationsendgerät) zugeordneten intelligenten Speicherkarte vorteilhaft ist, um dem Anwender die Nutzung der MMS-Diversion-Funktionalität sowohl beim Wechseln des Mobilfunk-Kommunikationsendgeräts als auch im Roaming-Fall zu erleichtern.

Ausführungsbeispiele der Erfindung sind in den Figuren dargestellt und werden im Folgenden näher erläutert.
Es zeigen

Figur 1    ein Blockdiagramm, in dem die Anbindung einer MMS-Relay/Servereinheit an ein Mobilfunk-Kommunikationsnetzwerk gemäß dem Stand der Technik dargestellt ist;

Figur 2    ein Blockdiagramm, in dem die MMS-Kommunikationsnetzwerk-Architektur gemäß den Ausführungsbeispielen der Erfindung auf der Basis von 3GPP dargestellt ist;

Figur 3    ein Blockdiagramm, in dem eine MMS-Relay/Servereinheit sowie deren Schnittstellen gemäß den Ausführungsbeispielen der Erfindung auf der Basis von 3GPP dargestellt sind;

Figur 4    ein Nachrichtenflussdiagramm, in dem der Nachrichtenaustausch zum Übertragen einer Multimedianachricht gemäß den Ausführungsbeispielen der Erfindung auf der Basis von 3GPP dargestellt ist;

Figur 5    ein Nachrichtenflussdiagramm, in dem der Nachrichtenaustausch gemäß einem Ausführungsbeispiel der Erfindung dargestellt ist;

Figur 6    ein Nachrichtenflussdiagramm, in dem der Nachrichtenaustausch gemäß einem anderen Ausführungsbeispiel der Erfindung dargestellt ist;

Figur 7    ein Blockdiagramm, in dem der Nachrichtenaustausch zum Bereitstellen eines Umleitungs-Zusammenwirkens zwischen einem Mobilfunk-Kommunikationsnetzwerk und einem MMS-Kommunikationsnetzwerk gemäß einem Ausführungsbeispiel der Erfindung dargestellt ist;

Figur 8    ein Blockdiagramm, in dem der Nachrichtenaustausch zum Bereitstellen eines Umleitungs-Zusammenwirkens zwischen einem Mobilfunk-Kommunikationsnetzwerk und einem MMS-Kommunikationsnetzwerk gemäß einem anderen Ausführungsbeispiel der Erfindung dargestellt ist; und

Figur 9    ein Blockdiagramm, in dem ein Roaming-Szenario gemäß einem Ausführungsbeispiel der Erfindung dargestellt ist.

Der so genannte **M**ultimedia **M**essaging **S**ervice (MMS), im Folgenden auch bezeichnet als Multimedianachrichten-Dienst, wie er in [3] und in [4] im Detail beschrieben ist, und gemäß welchem auch das MMS-Kommunikationssystem gemäß den Ausführungsbeispielen der Erfindung bis auf die im Folgenden beschriebenen erfindungsgemäßen Weiterentwicklungen ausgestaltet ist, wird derzeit als Nachfolge des rudimentären aber überaus erfolgreichen Kurznachrichten-Dienstes SMS (**S**hort **M**essaging **S**ervice) gehandelt.

MMS ermöglicht das mobile Versenden, d.h. das Versenden mittels Mobilfunksignalen, und den mobilen Empfang, d.h. das Empfangen mittels Mobilfunksignalen, von digitalen Nachrichten mit multimedialen Inhalten, die im Folgenden als Multimedia Message (MM) bzw. auch als Multimedianachricht bezeichnet werden.

Im Gegensatz zu dem Kurznachrichten-Dienst (SMS) entfällt bei den Multimedianachrichten-Dienst die Beschränkung auf reine Textinhalten von 160 Zeichen Länge. Eine Multimedianachricht kann aus mehreren Multimedianachricht-Elementen von unterschiedlichen Dateitypen (beispielsweise textuelle Daten, Audiodaten, Standbilddaten, Videobilddaten) und Dateiformaten (bei textuellen Daten beispielsweise Winword-Format, bei Audiodaten beispielsweise MP3, bei Standbild beispielsweise GIF oder JPEG, bei Videobilddaten beispielsweise MPEG) bestehen. Selbst ein zeitlich festgelegter Ablauf von kleinen multimedialen Präsentationen wird ermöglicht, was den Multimedianachrichten-Dienst beispielsweise für so genannte Mehrwertdienste (Value Added Service, VAS) interessant macht. Der Multimedianachrichten-Dienst ist nicht auf ein Mobilfunk-Kommunikationsnetzwerk gemäß dem GSM-Kommunikationsstandard beschränkt, sondern kann beispielsweise auch in einem Mobilfunk-Kommunikationssystem betrieben werden, welches gemäß dem GPRS-Kommunikationsstandard (**G**eneral **P**acket **R**adio **S**ervices), gemäß dem EDGE-Kommunikationsstandard (**E**nhanced **D**ata for **G**SM **E**volution) oder gemäß dem UMTS-Kommunikationsstandard (**U**niversal **M**obile **T**elecommunication **S**ystem) ausgebildet ist, somit beispielsweise auch allgemein gemäß einem 3GPP-Kommunikationsstandard.

Der Multimedianachrichten-Dienst wird derzeit von zwei Standardisierungsgremien, nämlich 3GPP (**3**rd **G**eneration **P**artnership **P**roject) und OMA (**O**pen **M**obile **A**lliance) standardisiert.

In dem Standardisierungsgremium 3GPP werden schwerpunktmäßig alle Netzwerkschnittstellen von dem Multimedianachrichten-Dienst standardisiert, während in der OMA schwerpunktmäßig die Luftschnittstelle behandelt wird. Teilweise gibt es auch Überschneidungen dieser beiden Verantwortungsbereiche. Die OMA ist im Sommer 2002 aus dem WAP-Forum (**W**ireless **A**pplication **P**rotocol) hervorgegangen.

**Fig.2** zeigt in einem Blockdiagramm 200 die Multimedianachrichten-Dienst-Kommunikationsnetzarchitektur gemäß den Ausführungsbeispielen der Erfindung und gemäß der Sicht von 3GPP.

In der vereinfachten Darstellung sind ein erster MMS-User-Agent A 201 sowie ein zweiter MMS-User-Agent B 202 vorgesehen, welche jeweils in einem Mobilfunk-Kommunikationsendgerät (nicht gezeigt) implementiert sind.

Unter einem MMS-User-Agent ist beispielsweise ein Software-Programm zu verstehen, das auf einem Mobilfunk-Kommunikationsendgerät oder auf einem an einem Mobilfunk-Kommunikationsendgerät angeschlossenen Gerät, wie beispielsweise einem Laptop, einem Personal Digital Assistant (PDA), einem Notebook, etc., implementiert sein kann und endgeräteseitig den MMS, d.h. den Multimedianachrichten-Dienst, realisiert.

Gemäß dieser vereinfachten Darstellung in Fig.2 sind die beiden MMS-User-Agents A, B, 201, 202 und damit die jeweiligen Mobilfunk-Kommunikationsendgeräte bzw. die an ein solches Mobilfunk-Kommunikationsendgerät angeschlossenen Geräte mittels einer ersten MMS-Relay/Servereinheit 203, welches sich in einem Zuständigkeitsbereich MMSE 204 (**M**ultimedia **M**essaging **S**ervice **E**nvironment) eines ersten MMS-Dienstleistungsanbieters (MMS-Providers) befindet und mittels einer zweiten MMS-Relay/Servereinheit 205, welche sich in einem Zuständigkeitsbereich MMSE 206 eines zweiten MMS-Dienstleistungsanbieters befindet, miteinander gekoppelt.

Eine MMS-Relay/Servereinheit, in der beispielsweise eine Multimedianachricht-Relaiseinrichtung integriert ist, ist ein Netzwerkelement, das in einem jeweiligen Zuständigkeitsbereich MMSE eines MMS-Dienstleistungsanbieters einem in diesem Zuständigkeitsbereich sich befindlichen User-Agent die MMS-Funktionalität zur Verfügung stellt.

Die erste MMS-Relay/Servereinheit 203 ist mit dem ersten MMS-User-Agent 201 mittels einer ersten MM1-Schnittstelle 207 gekoppelt. Entsprechend ist die zweite MMS-Relay/Servereinheit 205 mit dem zweiten MMS-User-Agent 202 mittels einer zweiten MM1-Schnittstelle 208 gekoppelt. Die beiden MM1-Schnittstellen 207, 208 weisen dabei jeweils die in Fig.1 dargestellten und oben im Zusammenhang mit Fig.1 beschriebenen Schnittstellen $U_u$ 115, $I_u$ 114, $G_n$ 112 und Gi 105 auf. Die beiden MMS-Relay/Servereinheiten 203, 204 sind miteinander mittels einer MM4-Schnittstelle 209 verbunden.

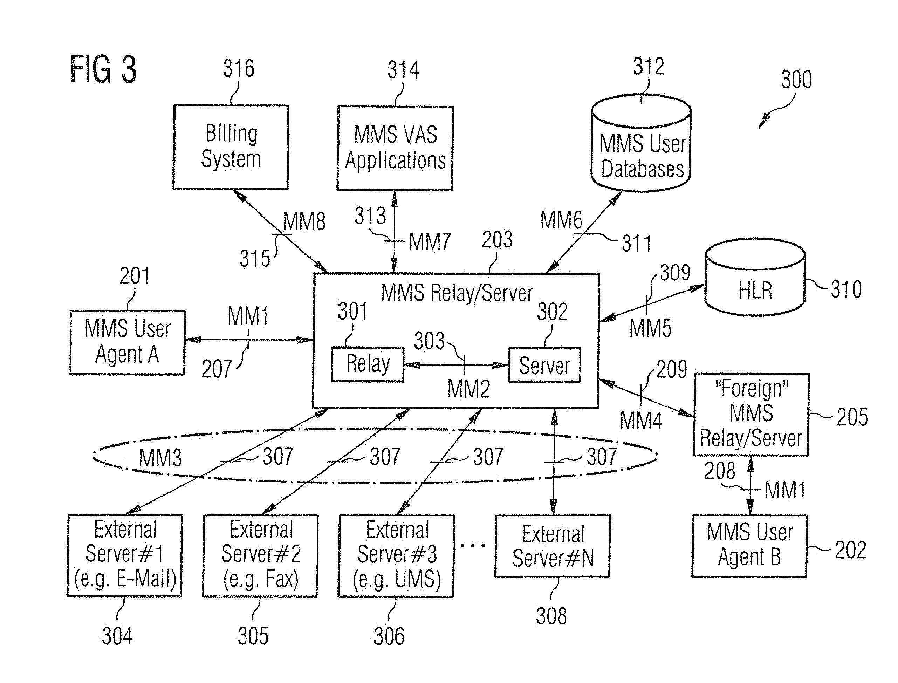

Die gemäß 3GPP definierten Schnittstellen zum Anschluss weiterer Netzwerkelemente an eine MMS-Relay/Servereinheit, insbesondere gemäß den Ausführungsbeispielen der Erfindung an die erste MMS-Relay/Servereinheit 203 zeigt **Fig.3** in einem Blockdiagramm 300.

In dem Blockdiagramm 300 ist beispielhaft die erste MMS-Relay/Servereinheit 203 dargestellt mit einer Relaiseinheit 301 und einer Servereinheit 302, wobei die Relaiseinheit 302 und die Servereinheit 303 mittels einer MM2-Schnittstelle 303 miteinander gekoppelt sind.

Wie oben beschrieben wurde, ist die erste MMS-Relay/Servereinheit 203 mit dem ersten MMS-User-Agent 201 mittels der ersten MM1-Schnittstelle 207 gekoppelt und steht darüber mit diesem in Verbindung. Weiterhin ist die zweite MMS-Relay/Servereinheit 205 mit dem zweiten MMS-User-Agent 202 mittels der zweiten MM1-Schnittstelle 208 gekoppelt und steht darüber mit diesem in Verbindung.

Ferner können mittels der MM3-Schnittstellen 307 unterschiedliche externe Servereinheiten wie beispielsweise eine E-Mail-Servereinheit 304, eine Fax-Servereinheit 305, eine UMS-Servereinheit 306 (**U**nified **M**essaging **S**ystem-Servereinheit) oder eine beliebig funktional anders ausgestaltete Servereinheit 308 an die erste MMS-Relay/Servereinheit 203 angeschlossen werden.

Die Anbindung eines anderen, fremden MMS-Dienstleistungsanbieters (MMS-Providers), beispielsweise mit der zweiten MMS-Relay/Servereinheit 205, wird mittels der MM4-Schnittstelle 209 realisiert, wobei die zweite MMS-Relay/Servereinheit 205 ihrerseits mittels der zweiten MM1-Schnittstelle 208 mit dem zweiten MMS-User-Agent 202 in Verbindung steht.

Eine MM5-Schnittstelle 309 verbindet die erste MMS-Relay/Servereinheit 203 mit einer Home-Location-Register-Einheit (HLR) 310 des Mobilfunk-Kommunikationsnetzbetreibers, wobei in der Home-Location-Register-Einheit 310 die individuellen Kundendaten eines jeden Mobilfunkteilnehmers gespeichert sind.

Die Home-Location-Register-Einheit 310 befindet sich üblicherweise im Zuständigkeitsbereich des Kommunikationsnetzbetreibers, der nicht zwangsläufig mit dem MMS-Dienstleistungsanbieter identisch sein muss.

Den Anschluss einer oder mehrerer MMS User Database(s) (MMS-Nutzerdatenbank(en)) 312 gestattet eine weitere Schnittstelle MM6 311. Mittels einer Schnittstelle MM7 313 wird der Anschluss von Servereinheiten 314 ermöglicht, die von einem Mehrwertdienst-Provider (**V**alue **A**dded **S**ervice **P**rovider, VASP) betrieben werden und die dem MMS-Nutzer Mehrwertdienste (**V**alue **A**dded **S**ervices, VAS) zur Verfügung stellen können.

Weiterhin ist noch eine weitere Schnittstelle MM8 315 zum Anschluss einer Kommunikationsnetzwerkeinheit 316 an die erste MMS-Relay/Servereinheit 203 vorgesehen, in der alle relevanten Informationen zum Vergebühren des Multimedianachrichten-Dienstes gesammelt und ausgewertet werden.

Es ist darauf hinzuweisen, dass das in Fig.3 beschriebene System nicht abschließend zu verstehen ist und gegebenenfalls bedarfsweise zusätzliche Schnittstellen vorgesehen sein können für unterschiedliche Anwendungsbereiche. So werden beispielsweise in den oben genannten Standardisierungsgremien derzeit weitere Schnittstellen MM9 (nicht gezeigt) und MM10 (nicht gezeigt) diskutiert.

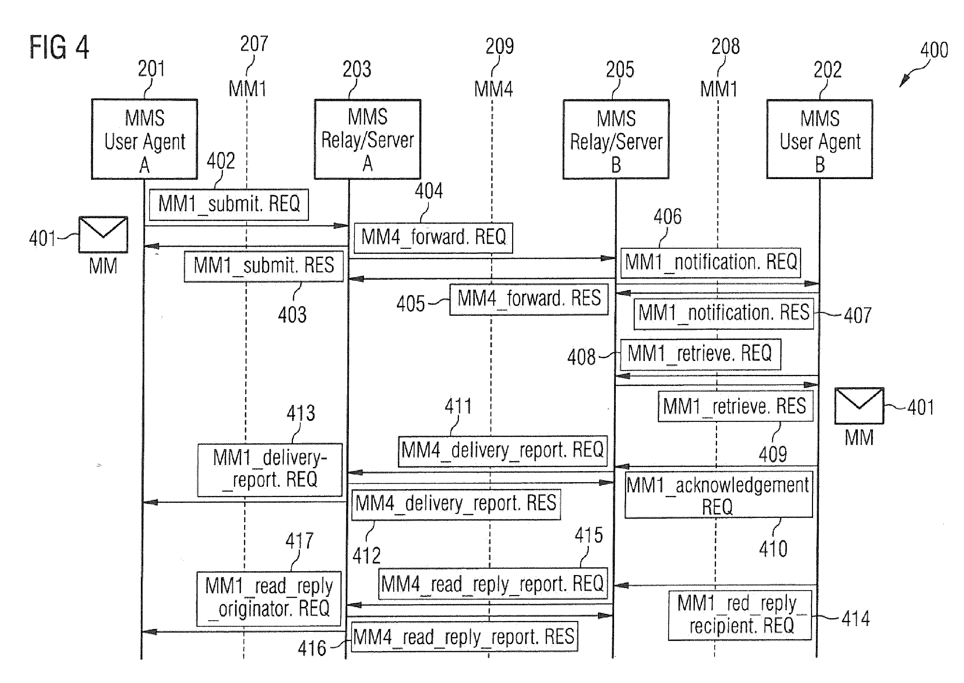

Im Folgenden wird der Austausch von Daten, anders ausgedrückt der vorgesehenen Protokolldateneinheiten, zwischen den oben dargestellten Datenübertragungseinheiten, nämlich den MMS-User-Agents 201, 202 und den MMS-Relay/Servereinheiten 203, 205 beim Versenden und Empfangen einer Multimedianachricht 401 anhand der in [4] definierten so genannten 3GPP Abstract Messages als Protokolldateneinheiten genauer erläutert (vgl. Nachrichtenflussdiagramm 400 in **Fig.4**).

Eine Abstract Message weist mindestens ein Information-Element (Kopffeld) auf.

Gemäß dem Multimedianachrichten-Dienst kann der Absender-MMS-User-Agent A 201 eine Multimedianachricht 401 über die erste (Luft-)Schnittstelle MM1 207 an die erste MMS-Relay/Servereinheit 203 seines MMS-Dienstleistungsanbieters mit der Abstract Message MM1_submit.REQ 402 schicken.

Die diese Nachricht 402 empfangende erste MMS-Relay/Servereinheit A 203 bestätigt den korrekten Empfang der MM1_submit.REQ 402 mit der Multimedianachricht 401 von dem ersten MMS-User-Agent A 201 mit der Abstract Message MM1_submit.RES 403, welche sie zu dem ersten MMS-User-Agent A 201 überträgt.

Die Übertragung der Multimedianachricht 401 an die zweite MMS-Relay/Servereinheit B 205, welche sich in dem Zuständigkeitsbereich MMSE des Empfängers befindet, geschieht mittels des Paars von Abstract Messages MM4_forward.REQ 404, welche die Multimedianachricht 401 enthält, und MM4_forward.RES 405, welche die Rückmeldung auf den korrekten Empfang der MM4_forward.REQ 404 darstellt.

Nach dem Empfang der MM4_forward.REQ-Nachricht 404 wird der Empfänger, d.h. der zweite MMS-User-Agent B 202 über die zum Herunterladen bereitliegende Multimedianachricht 401 mit der Abstract Message MM1_notification.REQ 406 informiert. In dieser MMS-Empfänger-Benachrichtigung, die auch als "MMS-Notification" bezeichnet wird, ist eine Referenz auf den Speicherplatz der Multimedianachricht 401 in dem Zuständigkeitsbereich MMSE des zweiten MMS-User-Agent 202 in Form eines **U**nique **R**essource **I**dentifiers (URI) enthalten. Eine auf den Empfang der MM1_notification.REQ-Nachricht 406 von dem zweiten MMS-User-Agent B 202 erzeugte und an die zweite MMS-Relay/Servereinheit B 205 übermittelte MM1_notification.RES-Nachricht 407 dient vorrangig als Bestätigung für den korrekten Empfang der MMS-Empfänger-Benachrichtigung an dem zweiten MMS-User-Agent B 202.

Mit einer Abstract Message MM1_retrieve.REQ 408 kann der Empfänger, d.h. der zweite MMS-User-Agent B 202 das Herunterladen der auf der zweiten MMS-Relay/Servereinheit B 205 bereitliegenden Multimedianachricht 401 initiieren. Die Zustellung der Multimedianachricht 401 von der zweiten MMS-Relay/Servereinheit B 205 an den zweiten MMS-User-Agent B 202 erfolgt mittels einer Abstract Message MM1_retrieve.RES 409, in welcher die Multimedianachricht 401 enthalten ist.

Die zweite MMS-Relay/Servereinheit B 205 kann mittels einer Abstract Message MM1_acknowledgement.REQ 410 von dem zweiten MMS-User-Agent B 202 über den Ausgang des Herunterladens der Multimedianachricht 401 informiert werden.

Die zweite MMS-Relay/Servereinheit B 205 kann, falls der Absender (d.h. in diesem Beispielfall der erste MMS-User-Agent A 201) dies so beantragt hat, die erste MMS-Relay/Servereinheit A 203 mit einem Abstract Message-Paar MM4_delivery_report.REQ 411, welche den Auslieferungsbericht enthält, und MM4_delivery_report.RES 412, welche eine korrespondierende Rückmeldung enthält und die von der ersten MMS-Relay/Servereinheit A 203 an die zweite MMS-Relay/Servereinheit B 205 übermittelt wird, über den Ausgang der Zustellung der Multimedianachricht 401 an den zweiten MMS-User-Agent B 202 informieren.

Die erste MMS-Relay/Servereinheit A 203 kann nun ihrerseits den Auslieferungsbericht an den ersten MMS-User-Agent A 201 mit Hilfe einer Abstract Message MM1_delivery_report.REQ 413 weiterleiten.

Ferner kann darüber hinaus der erste MMS-User-Agent A 201 auch eine Lesebestätigung beantragen und zugestellt bekommen.

Zu diesem Zweck sind die folgenden Abstract-Messages definiert:

- MM1_read_reply_recipient.REQ 414, welche die Lesebestätigung enthält und welche von dem zweiten MMS-User-Agent B 202 an die zweite MMS-Relay/Servereinheit B 205 übertragen wird;
- MM4_read_reply_report.REQ 415, welche die Lesebestätigung enthält und welche von der zweiten MMS-Relay/Servereinheit B 205 erzeugt wird und an die erste MMS-Relay/Servereinheit A 203 übertragen wird;
- MM4_read_reply_report.RES 416, welche die Rückmeldung auf den Empfang der MM4_read_reply_report.REQ-Nachricht 415 enthält und von der ersten MMS-Relay/Servereinheit A 203 erzeugt wird und an die zweite MMS-Relay/Servereinheit B 205 übertragen wird; und
- MM1_read_reply_originator.REQ 417, welche die Lesebestätigung enthält und welche von der ersten MMS-Relay/Servereinheit A 203 erzeugt wird und an den ersten MMS-User-Agent A 201 übertragen wird.

Im Unterschied zum Auslieferungsbericht, der in der zweiten MMS-Relay/Servereinheit B 205 erzeugt wird, wird die Lesebestätigung in dem zweiten MMS-User-Agent B 202 selbst generiert.

Über die in Fig.4 dargestellten und oben erläuterten Abstract Messages sind in [4] zusätzliche Abstract Messages definiert, beispielsweise für die MM-Box-Funktionalität (d.h. für das Speichern und Verwalten von Multimedianachrichten im Kommunikationsnetzwerk).

Für jede der oben beschriebenen 3GPP Abstract Messages für die (Luft-)Schnittstelle MM1 ist eine entsprechende OMA-Multimedianachrichten-Dienst-Protokolldateneinheit (**O**pen **M**obile **A**lliance **M**ultimedia **M**essaging **S**ervice **P**rotocol **D**ata **U**nit, OMA MMS PDU) vorgesehen. Details über den Aufbau und Inhalt der OMA MMS PDUs sind in [6] spezifiziert.

Jede OMA MMS PDU weist mindestens ein Kopffeld auf mit einem zugehörigen Feldwert. Neben MMS-spezifischen Kopffeldern, die in [6] spezifiziert sind, können auch Standard-RFC-822-Kopffelder, wie sie beispielsweise in [9] dargestellt sind, Bestandteil einer OMA MMS PDU sein.

Die Reihenfolge der Kopffelder ist im Prinzip beliebig, jedoch sollen gemäß [6] die folgenden drei Kopffelder - falls vorhanden - jeweils am Beginn einer OMA MMS PDU stehen:

- X-Mms-Message-Type, womit die Art der OMA MMS PDU angezeigt wird;
- X-Mms-Transaction-ID, womit die Zusammengehörigkeit zweier OMA MMS PDUs angezeigt wird; und
- X-Mms-MMS-Version, womit die von der sendenden Einheit unterstützte MMS-Version angezeigt wird.

Zwei zusammengehörige OMA MMS PDUs, beispielsweise ein Request/Response-Pärchen von OMA MMS PDUs, werden üblicherweise durch ein eindeutiges Transaktions-Identifikationsmerkmal als zusammengehörig gekennzeichnet, üblicherweise mittels der gleichen Transaktions-Identifikatonsangabe, d.h. beispielsweise mittels der gleichen X-Mms-Transaction-ID.

Für den Transport der MMS-Daten über die Schnittstelle MM1 werden die OMA MMS PDUs in Wireless Session Protocol-Protokolldateneinheiten (WSP PDUs) oder in Hypertext Transfer Protocol-Nachrichten (HTTP Messages) der beiden in MMS benutzten Transportprotokolle WSP (beschrieben beispielsweise in [7]) und HTTP (beschrieben beispielsweise in [8]) eingefügt.

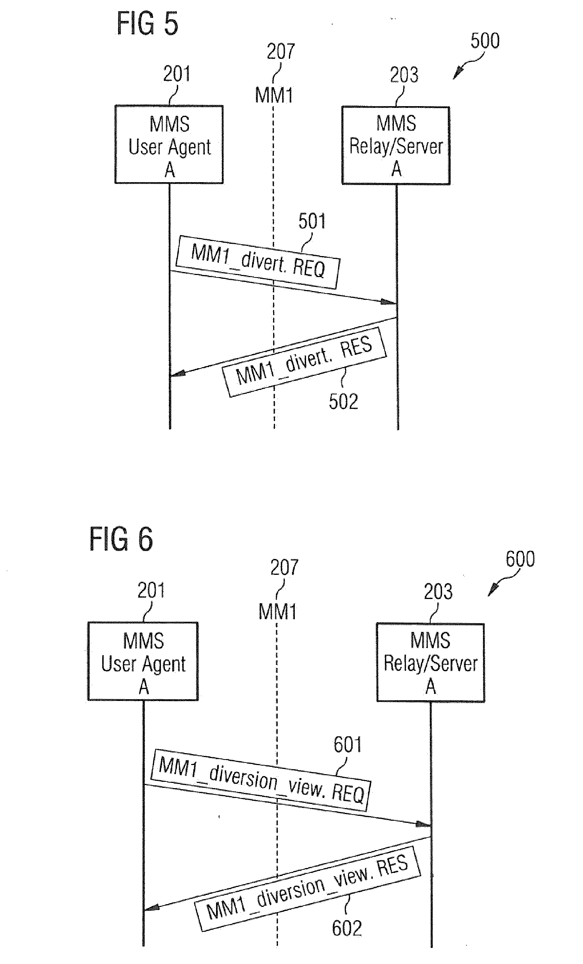

Damit der erste MMS-User-Agent A 201 der ersten MMS-Relay/Servereinheit A 203 die von dem Nutzer des Mobilfunk-Kommunikationsendgeräts, in welchem der erste MMS-User-Agent A 201 implementiert ist, gewünschten Umleitungseinstellungen mitteilen kann, werden gemäß einem ersten Aspekt der Erfindung zwei neue 3GPP Abstract Messages vorgesehen (vgl. Nachrichtenflussdiagramm 500 in **Fig.5**).

Mittels dieser Abstract Messages ist es nunmehr dem ersten MMS-User-Agent A 201 möglich, der ersten MMS-Relay/Servereinheit A 203 mitzuteilen, dass eine Umleitung von Multimedianachrichten, welche an den ersten MMS-User-Agent 201 gerichtet sind und welche bei der ersten MMS-Relay/Servereinheit A 203 eingehen, zu einer in einer MM1_divert-REQ-Nachricht 501 als Umleitungs-Anforderungsnachricht enthaltenen Umleitungsadresse gewünscht wird.

In einer Umleitungs-Bestätigungsnachricht 502 MM1_divert.RES ist eine Rückmeldung enthalten, ob die Umleitungseinstellungen, d.h. die Parameter für die gewünschte Umleitung, welche in der Umleitungsanforderungsnachricht 501 enthalten sind, in der ersten MMS-Relay/Servereinheit A 203 gesetzt, d.h. eingestellt werden konnten.

Details über die in den beiden neuen oben dargelegten 3GPP Abstract Messages 501, 502 enthaltenen Kopffelder (Information Elements) werden in den folgenden Tabellen, nämlich der Tabelle 1 und der Tabelle 2 gegeben, wobei auf das in [4] beschriebene übliche Format in englischer Sprache zurückgegriffen wurde.

**Tabelle 1:** Information elements in the MM1_divert.REQ.

| Information element | Presence | Description |
| --- | --- | --- |
| Message Type | Mandatory | Identifies this message as MM1 divert.REQ. |
| Transaction ID | Mandatory | The identification of the MM1_divert.REQ/MM1_divert.RES pair. |
| MMS Version | Mandatory | Identifies the version of the interface supported by the MMS User Agent. |
| Diversion Address | Mandatory | An alternative address for the MMS Diversion functionality. |
| Diversion Conditions | Optional | A list of conditions for the MMS Diversion functionality. |
| Diversion Interworking Request | Optional | A flag indicating whether the user allows/requests diversion interworking between MMS and PLMN call settings. |

Anschaulich bedeutet dies, dass in der Umleitungs-Anforderungsnachricht MM1_divert-REQ 501 folgende Informationselemente enthalten sind:

• Angabe des Nachrichten-Typs (üblicherweise vorgesehen), mit dem die Nachricht als MM1_divert.REQ-Nachricht identifiziert wird;

• Transaktions-Identifikationsangabe (üblicherweise vorgesehen), mit der das MM1_divert.REQ/MM1-divert.RES-Abstract-Message-Paar identifiziert wird;

• MMS-Version (üblicherweise vorgesehen), mittels welcher die Version der Schnittstelle identifiziert wird, welche von dem jeweiligen MMS-User-Agent unterstützt wird;

• Umleitungsadresse (üblicherweise vorgesehen), mit der die alternative Adresse für die MMS-Funktionalität angegeben wird;

• Umleitungsbedingungen (optional), d.h. eine Liste von Bedingungen, unter denen die MMS-Umleitungsfunktionalität ausgeführt werden soll;

• Angabe, ob der Nutzer ein Umleitungs-Zusammenwirken zwischen MMS und PLMN-Rufeinstellungen erwünscht und/oder erlaubt (optional).

**Tabelle 2:** Information elements in the MM1_divert.RES.

| Information element | Presence | Description |
| --- | --- | --- |
| Message Type | Mandatory | Identifies this message as MM1 divert.RES. |
| Transaction ID | Mandatory | The identification of the MM1_divert.REQ/MM1_divert.RES pair. |
| MMS Version | Mandatory | Identifies the version of the interface supported by the MMS Relay/Server. |
| Request Status | Mandatory | Status of the MMS diversion request MM1 divert.REQ. |
| Request Status Text | Optional | Explanatory text corresponding to the status of the diversion request. |
| Diversion Interworking Response | Optional | Indication whether diversion interworking is supported. |

Anschaulich bedeutet dies, dass in der Umleitungs-Bestätigungsnachricht MM1_divert.RES 502 folgende Informationselemente enthalten sind:

• Angabe des Nachrichten-Typs (üblicherweise vorgesehen), mittels welchen angegeben wird, dass es sich um eine Nachricht des Typs MM1_divert.RES handelt;

• Transaktion-Identifikationsangabe (üblicherweise vorgesehen), mit der das MM1_divert.REQ/MM1_divert.RES-Abstract Message-Paar identifiziert wird;

- MMS-Version (üblicherweise vorgesehen), mit welcher die Version der Schnittstelle identifiziert wird, welche von der MMS-Relay/Servereinheit unterstützt wird;
- Anfragestatus (üblicherweise vorgesehen), d.h. eine Angabe mittels welcher der Status der MMS-Umleitungsanfrage MM1_divert.REQ angegeben wird;
- Anfragestatus-Text (optional), womit ein erläuternder Text angegeben wird, welcher zu dem Status der Umleitungsanfrage zugehörig ist;
- Angabe, ob ein Umleitungs-Zusammenwirken zwischen MMS und PLMN-Rufeinstellungen unterstützt wird (optional).

Da für die Schnittstelle MM1 207 zu jeder 3GPP Abstract Message eine entsprechende OMA MMS PDU vorgesehen ist, sind gemäß diesem Ausführungsbeispiel in der Erfindung die oben vorgeschlagenen Erweiterungen auch in entsprechenden OMA MMS PDUs vorgesehen.

Die folgenden Tabellen, nämlich Tabelle 3 und Tabelle 4, zeigen die Einzelheiten gemäß dem in [6] üblichen Format (in englischer Sprache).

**Tabelle 3** Header fields of M-Divert.req PDU

| Field Name | Field Value | Description |
|---|---|---|
| X-Mms-Message-Type | Message-type-value = m-divert-req | Mandatory. Specifies the PDU type. |
| X-Mms-Transaction-ID | Transaction-id-value | Mandatory. A unique identifier for the diversion transaction that provides linkage between the M-Divert.req and corresponding M-Divert.conf PDU. |
| X-Mms-MMS-Version | MMS-version-value | Mandatory. The MMS version number. According to this specification, the version is x.y. |
| X-Mms-Diversion-Address | Diversion-address-value | Mandatory. An alternative address for the MMS Diversion functionality. |
| X-Mms-Diversion-Condition | Diversion-condition-value | Optional. Condition(s) for the MMS Diversion functionality. |
| X-Mms-Diversion-Interworking-Request | Diversion-interworking -request-value | Optional. A flag indicating whether the user allows/requests interworking of MMS diversion settings and PLMN call diversion settings. |

**Tabelle 4:** Header fields of M-Divert.conf PDU

| Field Name | Field Value | Description |
|---|---|---|
| X-Mms-Message-Type | Message-type-value = m-divert-conf | Mandatory. Specifies the PDU type. |
| X-Mms- | Transaction- | Mandatory. |

(fortgesetzt)

| Field Name | Field Value | Description |
|---|---|---|
| Transaction-ID | id-value | A unique identifier for the diversion transaction that provides linkage between the M-Divert.req and corresponding M-Divert.conf PDU. It originates from the M-Divert.req PDU. |
| X-Mms-MMS-Version | MMS-version-value | Mandatory. The MMS version number. According to this specification, the version is x.y. |
| X-Mms-Response-Status | Response-status-value | Mandatory. Status of the MMS diversion request received in the M-Divert.req PDU. |
| X-Mms-Response-Status-Text | Response-status-text-value | Optional. Descriptive text that qualifies the Response-status-value. |
| X-Mms-Diversion-Interworking-Response | Diversion-interworking -response-value | Optional. Indication whether diversion interworking is supported. |

Die oben dargestellten neu definierten OMA MMS PDUs **M-Divert.req** und **M-Divert.conf** weisen gemäß diesem Ausführungsbeispiel der Erfindung die folgenden hexadezimalen Werte in dem Kopffeld X-Mms-Message-Type auf:

**m-divert-req = <Octet 148> ;**

**m-divert-conf = <Octet 149>.**

Die in den OMA MMS PDUs M-Divert.req und M-Divert.conf neu vorgesehenen Kopffelder X-Mms-Diversion-Address, X-Mms-Diversion-Condition und X-Mms-Diversion-Interworking-Request, sowie X-Mms-Diversion-Interworking-Response sollen gemäß [6] Kommunikationsstandard-konform gemäß diesem Ausführungsbeispiel der Erfindung die im Folgenden aufgelisteten hexadezimalen Kopffeld-Codierungen und Feldwerte tragen, d.h. aufweisen:
**X-Mms-Diversion-Address field**

| X-Mms-Diversion-Address | 0x3D |
|---|---|

Diversion-address-value = Encoded-string-value
**X-Mms-Diversion-Condition field**

| X-Mms-Diversion-Condition | 0x3E |
|---|---|

Diversion-condition-value = Value-length (Add | Remove) MMS-value Encoded-string-value

```
Add = <Octet 128>
```

```
Remove = <Octet 129>
```

Es ist in diesem Zusammenhang anzumerken, dass es für den syntaktischen Aufbau des Feldwertes für das Kopffeld X-Mms-Diversion-Condition beliebig viele Möglichkeiten gibt; an dieser Stelle wird exemplarisch nur eine aufgelistet. Mit dieser Variante kann ein Schlüsselwort (Encoded-string-value) zu einer Liste von Schlüsselwörtern für ein bestimmtes Kopf-Feld (MMS-value) hinzugefügt bzw. von dieser gelöscht werden. Alternativ ist es vorgesehen, auch eine andere Syntax zu verwenden, beispielsweise um Dateiformate im Nutzdatenteil einer MM als Filterkriterium zu benutzten.

**X-Mms-Diversion-Interworking-Request field**

| X-Mms-Diversion-Interworking-Request | 0x3F |
| --- | --- |

Diversion-interworking-request-value = Yes | No

$$Yes = <Octet\ 128>$$

$$No = <Octet\ 129>$$

**X-Mms-Diversion-Interworking-Response field**

| X-Mms-Diversion-Interworking-Response | 0x40 |
| --- | --- |

Diversion-interworking-response-value = True | False

$$True = <Octet\ 128>$$

$$False = <Octet\ 129>$$

Gemäß einer Ausgestaltung der Erfindung ist es vorgesehen, Mechanismen zu schaffen, mit denen gewährleistet wird, dass sich der Nutzer jederzeit über die von ihm aktuell gesetzten bedingten MMS-Umleitungseinstellungen und/oder unbedingten MMS-Umleitungseinstellungen informieren kann.

Zu diesem Zweck werden wiederum zwei neue 3GPP Abstract Messages vorgesehen, wie sie in einem Nachrichtenflussdiagramm 600 in **Fig.6** dargestellt sind.

In einer Umleitungsansicht-Anforderungsnachricht MM1_diversion_view.REQ 601, welche von dem ersten MMS-User-Agent A 201 erzeugt wird und an die erste MMS-Relay/Servereinheit A 203 mittels der ersten MM1-Schnittstelle 207 übertragen wird, ist die Anfrage zur Übertragung von den derzeitig aktuellen Umleitungseinstellungen, d.h. den derzeit aktivierten Umleitungsparametern enthalten.

Auf den Erhalt der Umleitungsansicht-Anforderungsnachricht MM1_diversion_view.REQ 601 hin ermittelt die erste MMS-Relay/Servereinheit A 203 die derzeit aktuellen Umleitungseinstellungen und übermittelt das Ergebnis, d.h. die aktuellen Parameter in einer von der ersten MMS-Relay/Servereinheit A 203 erzeugten und an den ersten MMS-User-Agent A 201 übertragenen Umleitungsansicht-Bestätigungsnachricht MM1_diversion_view.RES 602.

Details über die in den beiden oben beschriebenen neuen 3GPP Abstract Messages enthaltenen Kopffelder (Information Elements) werden in den folgenden Tabellen, nämlich in der Tabelle 5 bzw. in der Tabelle 6 gegeben, wobei auf das in [6] übliche Format (in englischer Sprache) zurückgegriffen wurde:

**Tabelle 5:** Information elements in the MM1_diversion_view.REQ.

| Information element | Presence | Description |
| --- | --- | --- |
| Message Type | Mandatory | Identifies this message as MM1 diversion view.REQ. |
| Transaction ID | Mandatory | The identification of the MM1 diversion view.REQ/MM1_divers ion view.RES pair. |
| MMS Version | Mandatory | Identifies the version of the interface supported by the MMS User Agent. |
| Diversion Select | Optional | Identifies the nature of the MM1 diversion view.REQ. |

Anschaulich bedeutet dies, dass die Umleitungsansicht-Anforderungsnachricht MM1_diversion_view.REQ 601 folgende Informationselemente enthält:
• Nachrichten-Typ, womit der Typ der Nachricht MM1_diversion_view.REQ identifiziert wird;
• Transaktions-Identifikationsangabe, mittels welchem das MM1_diversion_view.REQ/MM1_diversion_view.RES-Abstract-Message-Paar identifiziert wird;
• MMS-Version, mit welcher die Version der Schnittstelle identifiziert wird, welcher von dem MMS-User-Agent unterstützt wird;
• Umleitungs-Auswahl mit welchem die Art der MM1_diversion_view.REQ identifiziert wird.

**Tabelle 6:** Information elements in the MM1_diversion_view.RES.

| Information element | Presence | Description |
| --- | --- | --- |
| Message Type | Mandatory | Identifies this message as MM1 diversion view.RES. |
| Transaction ID | Mandatory | The identification of the MM1_diversion_ view.REQ/MM1_divers ion view.RES pair. |
| MMS Version | Mandatory | Identifies the version of the interface supported by the MMS Relay/Server. |
| Diversion Settings | Optional | The requested (listing of) setting(s) for the MMS Diversion functionality. |
| Request Status | Mandatory | The status of the MMS diversion view request MM1 diversion view.REQ. |
| Request Status Text | Optional | Explanatory text corresponding to the status of the diversion view request. |
| Diversion-Interworking-Response | Optional | Indication whether diversion interworking is supported. |

Anschaulich bedeutet dies, dass in der Umleitungsansicht-Bestätigungsnachricht 602 MM1_diversion_ view.RES die folgenden Informationselemente enthalten sind:

• Nachrichten-Typ, mittels welchem die Nachricht als MM1_diversion_view.RES identifiziert wird;
• Transaktions-Identifikationsangabe, mittels welchen das MM1_diversion_view.REQ/MM1_diversion_view.RES-Abstract-Message-Paar identifiziert wird;
• MMS-Version, mittels welchem die Version der Schnittstelle identifiziert wird, welche von der MMS-Relay/Servereinheit unterstützt wird;
• Umleitungseinstellungen, mittels welchen die angeforderte Liste von Einstellungen bzw. die angeforderte Einstellung der MMS-Umleitungsfunktionalität angegeben wird;
• Anfragestatus, mittels welchem der Status der MMS-Umleitungsansicht-Anforderung MM1_diversion_view.REQ angegeben wird;
• Anfragestatus-Text, mittels welchem ein erläuternder Text angegeben wird, der zu dem Status der Umleitungsansicht-Anforderung gehört; und
• Umleitungs-Zusammenwirkungs-Antwort, mittels welcher angezeigt wird, ob ein Umleitungs-Zusammenwirken unterstützt wird.

Als Namen für die entsprechenden OMA MMS PDUs, welche ebenfalls gemäß diesen Ausführungsformen der Erfindung vorgesehen sind, werden gemäß diesen Ausführungsbeispielen M-Diversion-View.req und M-Diversion-View.conf verwendet. Die Tabelle 7 und die Tabelle 8 zeigen jeweils die Einzelheiten gemäß dem in [6] üblichen Format in englischer Sprache:

**Tabelle 7: Header fields for M-Diversion-View.req PDU.**

| Field Name | Field Value | Description |
| --- | --- | --- |
| X-Mms-Message-Type | Message-type-value = m-diversion- | Mandatory. Specifies the PDU type. |
|  | view-req |  |

(fortgesetzt)

| Field Name | Field Value | Description |
|---|---|---|
| X-Mms-Transaction-ID | Transaction-id-value | Mandatory.<br>A unique identifier for the viewing transaction that provides linkage between the M-Diversion-View.req and corresponding M-Diversion-View.conf PDU. |
| X-Mms-MMS-Version | MMS-version-value | Mandatory.<br>The MMS version number.<br>According to this specification, the version is x.y3. |
| X-Mms-Diversion-Select | Diversion-select-value | Optional.<br>The user may specify details of his query (show all MMS diversions, show unconditional MMS diversions, show conditional MMS diversions, etc.). |

**Tabelle 8:** Header fields for M-Diversion-View.conf PDU.

| Field Name | Field Value | Description |
|---|---|---|
| X-Mms-Message-Type | Message-type-value = m-diversion-view-conf | Mandatory.<br>Specifies the PDU type. |
| X-Mms-Transaction-ID | Transaction-id-value | Mandatory.<br>A unique identifier for the viewing transaction that provides linkage between the M-Diversion-View.req and corresponding M-Diversion-View.conf PDU. |
| X-Mms-MMS-Version | MMS-version-value | Mandatory.<br>The MMS version number.<br>According to this specification, the version is x.y. |
| X-Mms-Diversion-Settings | Diversion-settings-value | Optional.<br>Setting(s) for the MMS Diversion functionality |
| X-Mms-Response-Status | Response-status-value | Mandatory.<br>Status of the MMS diversion view request received in the M-diversion-view.req PDU. |
| X-Mms-Response-Status-Text | Response-status-text-value | Optional.<br>Descriptive text that qualifies the Response-status-value. |
| X-Mms-Diversion-Interworking-Response | Diversion-interworking-response-value | Optional.<br>Indication whether diversion interworking is supported. |

Die oben neu definierten OMA MMS PDUs **M-Diversion-View.req** und **M-Diversion-View.conf** weisen gemäß diesen Ausführungsbeispielen der Erfindung die folgenden hexadezimalen Werte im Kopffeld X-Mms-Message-Type auf:

**m-diversion-view-req = <Octet 150>;**

**m-diversion-view-conf = <Octet 151>.**

Die in den OMA MMS PDUs **M-Diversion-View.req** und **M-Diversion-View.conf** neu eingeführten Kopffelder X-Mms-Diversion-Select und X-Mms-Diversion-Settings sollen gemäß [6] standardkonform die im Folgenden aufgelisteten hexadezimalen Kopffeldcodierungen und Feldwerte tragen:

**X-Mms-Diversion-Select field**

| X-Mms-Diversion-Select | 0x41 |
|---|---|

Diversion-select-value = all | unconditional | conditional

all = <Octet 128>

unconditional = <Octet 129>

conditional = <Octet 130>

**X-Mms-Diversion-Settings field**

| X-Mms-Diversion-Settings | 0x42 |
|---|---|

Diversion-settings-value = Value-length MMS-value Encoded-string-value

Es ist in diesem Zusammenhang darauf hinzuweisen, dass für den syntaktischen Aufbau des Feldwertes für das Kopffeld X-Mms-Diversion-Settings ebenso wie für den oben beschriebenen Feldwert des Kopffeldes X-Mms-Diversion-Condition beliebig viele Möglichkeiten gibt; auch hier wird wieder exemplarisch nur eine davon aufgelistet. Mit dieser Variante kann ein Schlüsselwort (Encoded-string-value), das auf ein bestimmtes Kopf-Feld (MMS-value) angewendet werden soll, angezeigt werden. Denkbar ist auch jede andere geeignete Syntax.

Wie oben beschrieben wurde, ist es gemäß einer anderen Ausgestaltung der Erfindung vorgesehen, das Zusammenspiel bzw. das Zusammenwirken (englisch: Interworking) zwischen den konventionell in einem GSM/UMTS-Mobilfunk-Kommunikationsnetz angewendeten Einstellungen und Kommandos für die Rufumleitungsfunktionen und den neuen oben beschriebenen Einstellungen und Kommandos für die Umleitung von Multimedianachrichten zu gewährleisten.

Im Folgenden wird dieses Zusammenspiel anhand zweier Ausführungsformen im Detail erläutert.

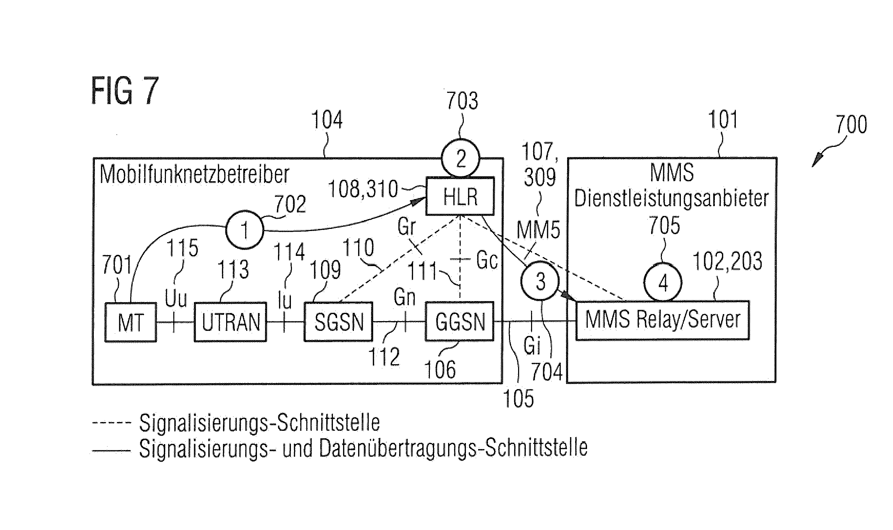

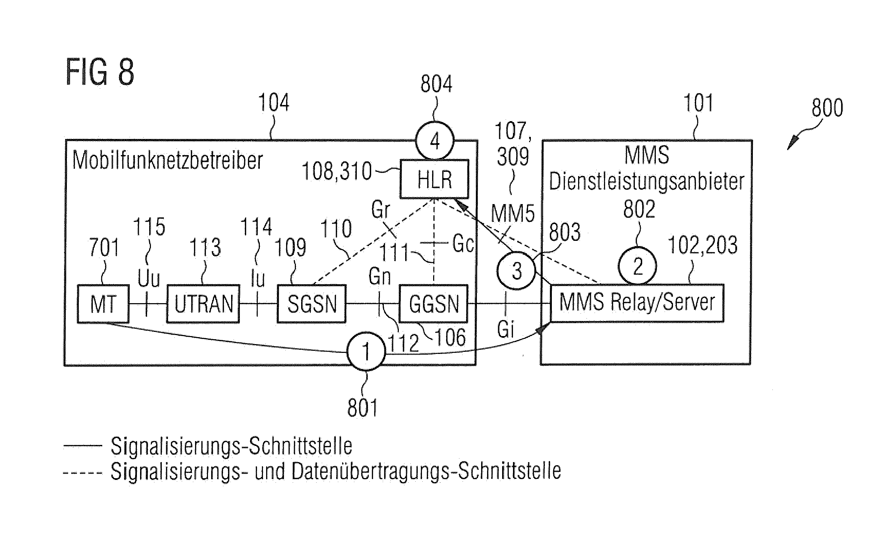

Zunächst wird beschrieben, wie mit üblichen USSD-Steuercodes wie sie in [1] und [2] beschrieben sind, auch die MMS-Umleitungsfunktionalität gesteuert werden kann (vgl. Blockdiagramm 700 in **Fig.7**) und nachfolgend wird der umgekehrte Fall beschrieben, d.h. der Fall, bei dem MMS-Umleitungs-Kommandos die GSM/UMTS-Rufumleitung steuern (vgl. Blockdiagramm 800 in **Fig.8**).

Gemäß einer ersten Ausführungsform der Erfindung wird in diesem Zusammenhang ein Umleitungs-Zusammenwirken zwischen dem Mobilfunk-Kommunikationsnetzwerk 104 und dem MMS-Kommunikationsnetzwerk 101 beschrieben, bei dem das Umleitungs-Zusammenwirken ausgelöst wird von dem Home Location Register HLR 310.

Es wird im Folgenden davon ausgegangen, das ein Nutzer beispielsweise eine generelle Rufumleitung für all eingehenden Anrufe einrichten möchte, weil er beispielsweise beabsichtigt, sein privates Mobilfunk-Kommunikationsendgerät MT 701 über einen gewissen Zeitraum nicht zu benutzen. Beispielsweise möchte er sein privates Mobilfunk-Kommunikationsendgerät 701 für die Dauer einer Geschäftsreise nicht mit sich führen, sondern ausschließlich sein Dienstgerät, d.h. sein dienstlich benutztes Mobilfunk-Kommunikationsendgerät.

In einer ersten Transaktion 702 werden hierzu konventionelle USSD-Steuercodes vom privaten Mobilfunk-Kommunikationsendgerät 701 über die GSM/UMTS-Signalisierungskanäle an das HLR 108, 310 übermittelt.

Der Aufbau des Mobilfunk-Kommunikationsnetzes ist derselbe, wie oben im Zusammenhang mit Fig.1 beschrieben, weshalb diesbezüglich teilweise gleiche Bezugszeichen verwendet werden.

Das HLR 108, 310 erhält dadurch Kenntnis über die "Art" der gewünschten Rufumleitung, in diesem Fall eine unbedingte Rufumleitung, und über die alternative Zielrufnummer, in diesem Fall die dienstliche Rufnummer, d.h. die Rufnummer des dienstlich genutzten Mobilfunk-Kommunikationsendgeräts.

Gemäß dieser Ausführungsform der Erfindung wird das HLR 108, 310 aktiv (in Fig.7 symbolisiert mit Transaktionssymbol 703), wobei die oben beschriebenen Informationen der Art der gewünschten Rufumleitung und der alternativen Zielrufnummer, d.h. anders ausgedrückt der Umleitungsnummer mittels der MM5-Schnittstelle 107, 311 in einer weiteren Transaktion 704 an die MMS-Relay/Servereinheit 102, 203 des MMS-Dienstleistungsanbieters 101 weitergeleitet wird.

Die MMS-Relay/Servereinheit 102, 203 des MMS-Dienstleistungsanbieters 101 kann bei Kenntnis der für eingehende GSM/UMTS-Anrufe gesetzten Umleitungseinstellungen nun seinerseits eine Umleitung für eintreffende Multimedianachrichten einrichten.

Dabei ist es in einer Ausführungsform der Erfindung vorgesehen, wie von dem HLR 108, 310 des Mobilfunk-Kommunikationsnetzbetreibers erhaltenen Daten mittels der MMS-Relay/Servereinheit 102, 203 auf Plausibilität zu prüfen. Eine bedingte GSM/UMTS-Rufumleitung, beispielsweise eine Rufumleitung nur für den Fall, dass das Ziel-Mobilfunk-Kommunikationsgerät "besetzt ist" ("nur bei besetzt") macht für den Multimedianachrichten-Dienst beispielsweise keinen Sinn und kann demnach vernachlässigt werden.

Alternativ ist eine Plausibilitätsprüfung auch in dem HLR 108, 310 vorgesehen, bevor die Daten über die MM5-Schnittstelle 107, 311 transportiert, d.h. übertragen werden oder von einer in Fig.7 nicht dargestellten Vermittlungseinheit zwischen dem HLR 108, 310 und der MMS-Relay/Servereinheit 102, 203.

In einer anderen Ausgestaltung der Erfindung ist es ferner vorgesehen, dass die MMS-Relay/Servereinheit 102, 203 die von dem HLR 108, 310 des Mobilfunk-Kommunikationsnetzbetreibers zugestellten Daten mit MMS-spezifischen Einstellungen abgleicht, bevor sie diese Einstellung ganz oder teilweise für den Multimedianachrichten-Dienst übernimmt.

Für die hier beispielhaft erwähnte unbedingte Umleitung ist es beispielsweise vorgesehen, dass der Nutzer ein noch feineres MMS-spezifisches Umleitungsregelwerk definiert, beispielsweise unterschiedliche Umleitungen abhängig von der Größe einer Multimedianachricht oder abhängig von den in einer Multimedianachricht enthaltenen Dateitypen bzw. Dateiformaten, wobei das Umleitungsregelwerk durch die von dem HLR 108, 310 gesendeten Kommandos in seiner Gesamtheit oder teilweise eingeschaltet bzw. ausgeschaltet werden kann (in Fig.7 symbolisiert durch Transaktionssymbol 705).

Gemäß einem anderen Aspekt der Erfindung wird davon ausgegangen, dass das Umleitungs-Zusammenwirken zwischen dem Mobilfunk-Kommunikationsnetzwerk und dem MMS-Kommunikationsnetzwerk (Diversion Interworking) ausgelöst wird durch die MMS-Relay/Servereinheit 102, 203 (vgl. Fig.8).

In diesem Fall wird beispielsweise davon ausgegangen, dass ein Nutzer eine Umleitung für eingehende Multimedianachrichten einrichten möchte, weil er beabsichtigt, sein privates Mobilfunk-Kommunikationsendgerät MT 701 über einen gewissen Zeitraum nicht zu benutzen. Beispielsweise möchte er sein privates Mobilfunk-Kommunikationsendgerät 701 für die Dauer einer Geschäftsreise nicht mit sich führen, sondern ausschließlich sein Dienstgerät, d.h. sein dienstlich genutztes Mobilfunk-Kommunikationsendgerät.

In einer ersten Transaktion 801 werden gemäß diesem Ausführungsbeispiel der Erfindung die oben beschriebenen neuen MMS-Diversion-Steuercodes von dem Mobilfunk-Kommunikationsendgerät 701 mittels der Schnittstelle MM1 (gemäß diesem Ausführungsbeispiel aufweisend die Schnittstelle $U_u$ 115, $I_u$ 114, $G_n$ 112 und Gi 105) an die MMS-Relay/Servereinheit 102, 203 des MMS-Dienstleistungsanbieters übermittelt. Die MMS-Relay/Servereinheit 102, 203 erhält dadurch Kenntnis über die "Art" der gewünschten Rufumleitung und über die alternative Zielrufnummer oder die alternative Zieladresse, anders ausgedrückt die Umleitungsadresse.

Gemäß dieser Ausführungsform der Erfindung wird nunmehr die MMS-Relay/Servereinheit 102, 203 aktiv, symbolisiert durch Transaktionssymbol 802 in Fig.8, und die MMS-Relay/Servereinheit 102, 203 leitet Informationen über die MM5-Schnittstelle 107, 311 an das HLR 108, 310 des Mobilfunk-Kommunikationsnetzbetreibers weiter, in Fig. 8 symbolisiert durch ein weiteres Transaktionssymbol 803. Das HLR 108, 310 kann nun basierend auf der Kenntnis der für eingehende Multimedianachrichten gesetzten Umleitungseinstellungen nun seinerseits eine Umleitung für eintreffende Anrufe einrichten für das Mobilfunk-Kommunikationsnetzwerk.

Dabei ist es in alternativen Ausgestaltungen der Erfindung vorgesehen, dass die von der MMS-Relay/Servereinheit des MMS-Dienstleistungsanbieters erhaltenen Daten von dem HLR 108, 310 des Mobilfunk-Kommunikationsnetzbetreibers auf Plausibilität geprüft werden. Nicht jede Umleitung für Multimedianachrichten (beispielsweise "Multimedianachrichten umleiten, die von Absender XY kommen") macht zwangsläufig auch für eingehende GSM/UMTS-Anrufe Sinn und kann unter Umständen unberücksichtigt bleiben.

Eine Plausibilitätsprüfung kann alternativ auch in der MMS-Relay/Servereinheit 102, 203 erfolgen, d.h. darin implementiert sein, bevor die Daten über die MM5-Schnittstelle 107, 311 transportiert werden oder von einer in Fig.8 nicht dargestellten Vermittlungseinheit zwischen der MMS-Relay/Servereinheit 102, 203 und dem HLR 108, 310.

Ferner ist es in einer noch anderen Ausgestaltung der Erfindung vorgesehen, dass das HLR 108, 310 die von der MMS-Relay/Servereinheit 102, 203 des MMS-Dienstleistungsanbieters zugestellten Daten mit GSM/UMTS-spezifischen Einstellungen abgleicht, bevor es diese Einstellungen ganz oder teilweise für eingehende GSM/UMTS-Anrufe übernimmt. Analog zum oben beschriebenen Fall könnte der Nutzer ein noch feineres GSM/UMTS-spezifisches Umleitungsregelwerk definiert haben, dass durch die von der MMS-Relay/Servereinheit 102 gesendeten Kommandos in seiner Gesamtheit oder teilweise eingeschaltet oder ausgeschaltet werden kann, in Fig.8 beschrieben durch ein Transaktionssymbol 804.

Ferner ist darauf hinzuweisen, dass das oben beschriebene Diversion Interworking mittels der MM5-Schnittstelle 107, 311 in manchen Fällen zusätzlich noch eine Adressangleichung der bei der GSM/UMTS-Telefonie und in den Multimedianachrichten-Dienst benutzten unterschiedlichen Adressierungsformate vorsieht. In einem GSM/UMTS-Mobilfunk-Kommunikationsnetz können MSISDN-Telefonnummern (**M**obile **S**tation **ISDN**-Telefonnummer, ISDN: **I**ntegrated **S**ervices **D**igital **N**etwork) und so genannte Short Codes benutzt werden, während bei einem Multimedianachrichten-Dienst zusätzlich auch eine E-Mail-Adresse zur Adressierung erlaubt ist, d.h. deren Verwendung möglich ist.

Wenn in allen Umleitungskommandos ausschließlich MSISDN-Telefonnummern verwendet werden, ist keine Anpassung erforderlich, es kann jedoch eine Anpassung vorgesehen sein, wenn auch eine E-Mail-Adresse in einem MMS-Kommunikationsnetzwerk zur Adressierung eingesetzt wird.

Die Angleichung der Adressierungsformate kann entweder durch die MMS-Relay/Servereinheit 102, 203 oder durch das HLR 108, 310 oder durch eine in den Fig.7 und Fig.8 nicht dargestellten Vermittlungseinheit realisiert werden und kann beispielsweise auch Bestandteil der oben erwähnten Plausibilitätsprüfung sein.

Es kann in dem aufgetretenen Fall von Roaming (englisch für "Umherstreifen") vorteilhaft sein, wenn in einem Mobilfunk-Kommunikationsendgerät oder in einer den Mobilfunk-Kommunikationsendgerät zugeordneten Speichereinheit die Information darüber abgespeichert wird, in welchem Public Land Mobile Network (PLMN), d.h. in welchem Mobilfunk-Kommunikationsnetzwerk das Umleitungs-Zusammenwirken (Diversion Interworking), d.h. das Zusammenspiel von konventioneller Rumumleitung und der oben beschriebenen Umleitung von Multimedianachrichten, unterstützt wird.

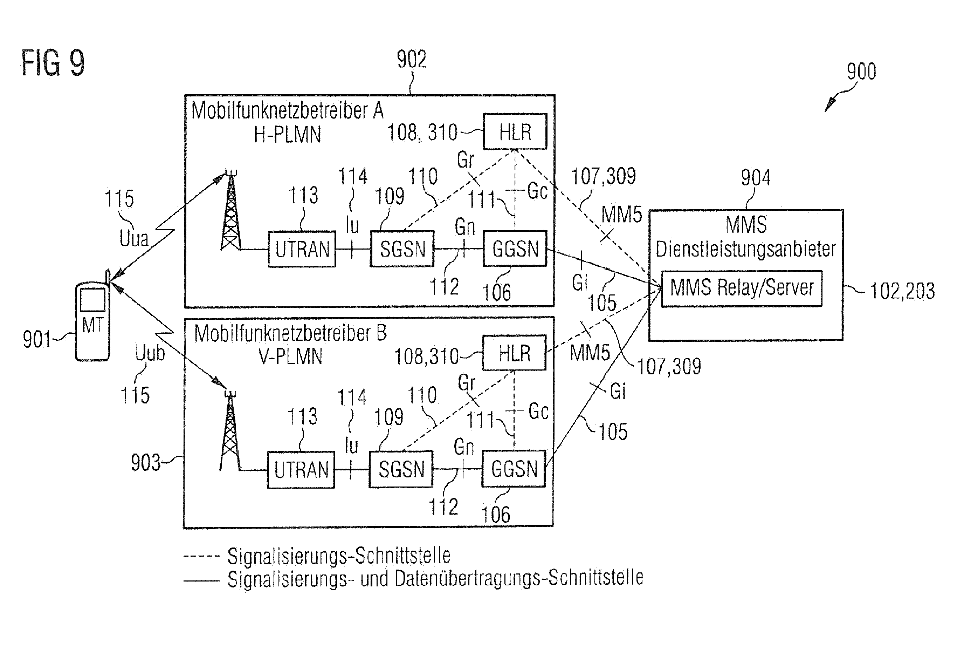

In dem Fall des Roamings, wobei unter Roaming im Rahmen dieser Beschreibung sowohl ein internationales Roaming als auch ein nationales Roaming zu verstehen ist, wechselt ein Mobilfunk-Teilnehmer mit seiner Mobilfunk-Kommunikationsendgerät 901 (vgl. Blockdiagramm 900 in **Fig.9**) von einem ersten Mobilfunk-Kommunikationsnetzbetreiber A zu einem zweiten Mobilfunk-Kommunikationsnetzbetreiber B, wobei das Mobilfunk-Kommunikationsnetz 902 des ersten Mobilfunk-Kommunikationsnetzbetreibers als Heimat-Mobilfunk-Kommunikationsnetz ("Home" Public Land Mobile Network, HPLMN) bezeichnet wird und das Mobilfunk-Kommunikationsnetz 903 des zweiten Mobilfunk-Kommunikationsnetzbetreibers als Besucher-Mobilfunk-Kommunikationsnetz ("Visited" Public Land Mobile Network, V-PLMN). Trotz des Wechsels des Mobilfunkteilnehmers zwischen unterschiedlichen Mobilfunk-Kommunikationsnetzen 902, 903 bleibt er jedoch hinsichtlich des Multimedianachrichten-Dienstes immer mit dem gleichen MMS-Dienstleistungsanbieter 904 verbunden.

Wenn von dem Mobilfunk-Kommunikationsnetz 902 des ersten Mobilfunk-Kommunikationsnetzbetreibers A das Umleitungs-Zusammenwirken (Diversion Interworking) unterstützt wird, bedeutet dies nicht zwangsläufig, dass auch das Mobilfunk-Kommunikationsnetz 903 des zweiten Mobilfunk-Kommunikationsnetzbetreiber B das Umleitungs-Zusammenwirken anbietet, da hierfür die oben beschriebenen Protokollerweiterungen auf der MM5-Schnittstelle 107 unterstützt werden müssen.

Eine besonders vorteilhafte Ausgestaltung für das gemäß einem Aspekt der Erfindung vorgesehene Speichern der Daten auf eine externe Speichereinheit liegt dann vor, wenn es sich bei der externen Speichereinheit um eine intelligente Speicherkarte, d.h. eine so genannte Smart Card, beispielsweise um eine Subscriber Identity Module-Karte (SIM-Karte) bei Einsatz in einem GSM-Kommunikationsnetzwerk oder um eine Universal Integrated Circuits Card (UICC) mit einem Universal Subscriber Identity Module (USIM) bei Einsatz in einem UMTS-Kommunikationsnetzwerk handelt, die in das mobile Endgerät gesteckt wird, beispielsweise in das Mobilfunk-Kommunikationsendgerät. Details über das in dem Mobilfunk-Kommunikationssystemen gemäß dem GSM-Kommunikationsstandard bzw. dem UMTS-Kommunikationsstandard eingesetzte SIM bzw. USIM sind in [5] definiert.

Aus diesem Grund ist gemäß einem Aspekt der Erfindung vorgesehen, die in [5] vorgeschlagenen Parameter in der USIM-Servicetabelle in der in der Tabelle 9 und in der Tabelle 10 dargestellten Ergänzungen vorzusehen. Mit einem Eintrag in dieser Tabelle kann in dem Mobilfunk-Kommunikationsendgerät angezeigt werden, welche Dienste das USIM unterstützt.

Gemäß diesen Ausführungsformen der Erfindungen sind zwei neue Dienste vorgesehen, die in den Tabellen mittels eines fettgedruckten Randes hervorgehoben sind, nämlich Dienst Nummer 72 (MMS Diversion Settings) und Dienst Nummer 73 (Diversion Interworking).

Die folgenden zwei Dienste sind dadurch dem Nutzer von dem Mobilfunk-Kommunikationsendgerät neu bereitgestellt:

- das Speichern und Lesen von MMS-Umleitungs-spezifischen Informationen,
- das Speichern und Lesen von Informationen über die netzwerkseitige Unterstützung von Diversion Interworking.

**Tabelle 9:** Das Elementary File "USIM Service Table".

| Identifier: '6F38' | Structure: transparent | Mandatory |
|---|---|---|
| SFI: '04' | | |
| File size: X bytes, X >= 1 | Update activity: low | |

Access Conditions:
    READ            PIN
    UPDATE          ADM
    DEACTIVATE      ADM
    ACTIVATE        ADM

| Bytes | Description | M/O | Length |
|---|---|---|---|
| 1 | Services n°1 to n°8 | M | 1 byte |
| 2 | Services n°9 to n°16 | O | 1 byte |
| 3 | Services n°17 to n°24 | O | 1 byte |
| 4 | Services n°25 to n°32 | O | 1 byte |
| etc. | | | |
| X | Services n°(8X-7) to n°(8X) | O | 1 byte |

-Services

Contents:    Service n°1:    Local Phone Book
             Service n°2:    Fixed Dialling Numbers (FDN)
             Service n°3:    Extension 2
             Service n°4:    Service Dialling Numbers (SDN)
             Service n°5:    Extension3
             Service n°6:    Barred Dialling Numbers (BDN)
             Service n°7:    Extension4
             Service n°8:    Outgoing Call Information (OCI and OCT)
             Service n°9:    Incoming Call Information (ICI and ICT)
             Service n°10:   Short Message Storage (SMS)
             Service n°11:   Short Message Status Reports (SMSR)
             Service n°12:   Short Message Service Parameters (SMSP)
             Service n°13:   Advice of Charge (AoC)
             Service n°14:   Capability Configuration Parameters (CCP)
             Service n°15:   Cell Broadcast Message Identifier

             Service n°70    Data download via USSD and USSD application mode
             Service n°71    Equivalent HPLMN

**Tabelle 10:** Die Dienste Nr. 72 und Nr. 73 sind neu.

| Service n°72 | MMS Diversion Settings |
|---|---|
| Service n°73 | Diversion Interworking |

Service 72:

Die folgende Tabelle zeigt eine mögliche Realisierung des Dienstes "MMS Diversion Settings" (Service Table Eintrag Nr. 72):

| Identifier: '6FDA' | | Structure: Linear fixed | | Optional |
|---|---|---|---|---|
| Record length: 4+X bytes | | Update activity: low | | |
| Access Conditions:<br>    READ                                    PIN<br>    UPDATE                                PIN<br>    DEACTIVATE                     ADM<br>    ACTIVATE                          ADM | | | | |
| Bytes | Description | | M/O | Length |
| X | Alternative address | | M | X bytes |
| Y | Diversion conditions | | M | Y bytes |
| Z | For future use | | M | Z bytes |

Service 73:

Die folgende Tabelle zeigt eine mögliche Realisierung des Dienstes "Diversion Interworking" (Service Table Eintrag Nr. 73):

| Identifier: '6FDB' | | Structure: Linear fixed | | Optional |
|---|---|---|---|---|
| Record length: 7n bytes | | Update activity: low | | |
| Access Conditions:<br>    READ                                    PIN<br>    UPDATE                                ADM<br>    DEACTIVATE                     ADM<br>    ACTIVATE                          ADM | | | | |
| Bytes | Description | | M/O | Length |
| 1 to 7 | Element 1 of the PLMN support list | | M | 7 bytes |
| 7n-6 to 7n | Element n of the PLMN support list | | O | 7 bytes |

Contents:

-   PLMN network subset, service provider ID and corporate ID of co-operative networks.

Coding:

-   For each 7 byte list element.

Bytes 1 to 3: PLMN (MCC + MNC): according to TS 24.008 [9].

Byte 4:

```
┌──┬──┬──┬──┬──┬──┬──┬──┐
│b8│b7│b6│b5│b4│b3│b2│b1│
└──┴──┴──┴──┴──┴──┴──┴──┘
```

LS bit of network subset digit 1

:

:

MS bit of network subset digit 1

LS bit of network subset digit 2

:

:

MS bit of network subset digit 2

Byte 5:

```
┌──┬──┬──┬──┬──┬──┬──┬──┐
│b8│b7│b6│b5│b4│b3│b2│b1│
└──┴──┴──┴──┴──┴──┴──┴──┘
                       └── LS bit of service provider digit 1
                    :
                    :
                 └── MS bit of service provider digit 1
              └── LS bit of service provider digit 2
                    :
                    :
        └── MS bit of service provider digit 2
```

Byte 6:

```
┌──┬──┬──┬──┬──┬──┬──┬──┐
│B8│b7│b6│b5│b4│b3│b2│b1│
└──┴──┴──┴──┴──┴──┴──┴──┘
                       └── LS bit of corporate digit 1
                    :
                    :
                 └── MS bit of corporate digit 1
              └── LS bit of corporate digit 2
                    :
                    :
        └── MS bit of corporate digit 2
```

Byte 7:

```
┌──┬──┬──┬──┬──┬──┬──┬──┐
│b8│b7│b6│b5│b4│b3│b2│b1│
└──┴──┴──┴──┴──┴──┴──┴──┘
                    X  0  Free space
                    X  1  Used space
                    0  1  Diversion Interworking NOT
                          Supported
                    1  1  Diversion Interworking Supported
                          Reserved for future use
```

Alternativ zu Dienst Nr. 73 "Diversion Interworking" könnten die Informationen, welcher Mobilfunknetzbetreiber Diversion Interworking unterstütz und welcher nicht, auch mit einem anderen bereits existierenden Dienst (beispielsweise in den Elementary Files "User controlled PLMN selector with Access Technology" (Service Table Eintrag Nr. 20) oder "Co-operative Network List" (Service Table Eintrag Nr. 37) durch ähnliche Erweiterungen realisiert werden.

In diesem Dokument sind folgende Veröffentlichungen zitiert:

[1] ETSI TS 100 625 V7.0.0 (1999-08); Digital cellular telecommunications system (Phase 2+); Unstructured Supplementary Service Data (USSD) - Stage 1; (GSM 02.90 version 7.0.0 Release 1998);

[2] ETSI TS 100 549 V7.0.0 (1999-08); Digital cellular telecommunications system (Phase 2+); Unstructured Supplementary Service Data (USSD) - Stage 2; (GSM 03.90 version 7.0.0 Release 1998);

[3] 3GPP TS 22.140 version 6.6.0, Release 6; Third Generation Partnership Project; Technical Specification Group Services and System Aspects; Multimedia Messaging Service (MMS); Service Aspects (Stage 1);

[4] 3GPP TS 23.140 version 6.8.0, Release 6; Third Generation Partnership Project; Technical Specification Group Terminals; Multimedia Messaging Service (MMS); Functional Description (Stage 2);

[5] 3GPP TS 31.102 version 6.8.0, Release 6; Third Generation Partnership Project; Technical Specification Group Terminals; Characteristics of the USIM application;

[6] MMS-ENC-V1_3-20050124-D; Open Mobile Alliance; MMS Encapsulation Specification V1.3; Draft Version, 24-January-2005;

[7] WAP-230-WSP "Wireless Session Protocol Specification", approved version 5-July-2001;

[8] RFC 2616 "Hypertext Transfer Protocol - HTTP/1.1"; June 1999;

[9] RFC 822 "Standard for the format of ARPA Internet Text Messages"; August 1982;

[10] DE 101 17 052 A1.

**Bezugszeichenliste**

| | |
|---|---|
| 100 | Blockdiagramm |
| 101 | MMS-Dienstleistungsanbieter |
| 102 | MMS-Relay/Servereinheit |
| 103 | Kernnetzwerk |
| 104 | Mobilfunk-Kommunikationsnetzbetreiber |
| 105 | $G_i$-Schnittstelle |
| 106 | GGSN |
| 107 | MM5-Schnittstelle |
| 108 | Home Location Register |
| 109 | SGSN |
| 110 | $G_r$-Schnittstelle |
| 111 | $G_c$-Schnittstelle |
| 112 | $G_n$-Schnittstelle |
| 113 | UTRAN |
| 114 | $I_u$-Schnittstelle |
| 115 | $U_u$-Schnittstelle |
| 116 | Mobilfunk-Kommunikationsendgerät |
| 200 | Blockdiagramm |
| 201 | erster MMS-User-Agent |
| 202 | zweiter MMS-User-Agent |
| 203 | erste MMS-Relay/Servereinheit |
| 204 | Zuständigkeitsbereich MMSE erster MMS-Dienstleistungsanbieter |
| 205 | zweite MMS-Relay/Servereinheit |
| 206 | Zuständigkeitsbereich MMSE zweiter MMS-Dienstleistungsanbieter |
| 207 | erste MM1-Schnittstelle |
| 208 | zweite MM1-Schnittstelle |
| 209 | MM4-Schnittstelle |
| 300 | Blockdiagramm |
| 301 | Relaiseinheit |
| 302 | Servereinheit |

303　MM2-Schnittstelle
304　E-Mail-Servereinheit
305　Fax-Servereinheit
306　UMS-Servereinheit
307　MM3-Schnittstelle
308　Servereinheit #N
309　MM5-Schnittstelle
310　Home Location Register-Einheit
311　MM6-Schnittstelle
312　MMS-Nutzerdatenbank
313　MM7-Schnittstelle
314　MMS-Mehrwertdienst
315　MM8-Schnittstelle
316　Vergebührungskomponente

400　Nachrichtenflussdiagramm
401　Multimedianachricht
402　MM1-submit.REQ
403　MM1-submit.RES
404　MM4_forward.REQ
405　MM4_forward.RES
406　MM1_notification.REQ
407　MM1_notification.RES
408　MM1_retrieve.REQ
409　MM1_retrieve.RES
410　MM1_acknowledgement.REQ
411　MM4_delivery_report.REQ
412　MM4_delivery_report.RES
413　MM1_delivery_report.REQ
414　MM1_read_reply_recipient.REQ
415　MM4_read_reply_report.REQ
416　MM4_read_reply_report.RES
417　MM1_read_reply_originator.REQ

500　Nachrichtenflussdiagramm
501　Umleitungs-Anforderungsnachricht
502　Umleitungs-Bestätigungsnachricht

600　Nachrichtenflussdiagramm
601　Umleitungsansicht-Anforderungsnachricht
602　Umleitungsansicht-Bestätigungsnachricht

700　Blockdiagramm
701　Mobilfunk-Kommunikationsendgerät
702　Transaktion
703　Transaktion
704　Transaktion
705　Transaktion

800　Blockdiagramm
801　Transaktion
802　Transaktion
803　Transaktion
804　Transaktion

900　Blockdiagramm

901　Mobilfunk-Kommunikationsendgerät

902     erster Mobilfunk-Kommunikationsnetzbetreiber

903     zweiter Mobilfunk-Kommunikationsnetzbetreiber

904     MMS-Dienstleistungsanbieter


**Patentansprüche**

1.  Verfahren zum Umleiten mindestens einer Multimedianachricht in einem Mobilfunk-Kommunikationsnetzwerk, bei dem abhängig von einer empfangenen Umleitungs-Anforderungsnachricht, welche von einem Mobilfunk-Kommunikationsendgerät gesendet wurde und mit der eine Umleitung der mindestens einen Multimedianachricht an eine in der Umleitungs-Anforderungsnachricht angegebene Umleitungsadresse beantragt wird, eine bei einer Multimedianachricht-Relaiseinrichtung, die außerhalb des Mobilfunk-Kommunikationsnetzwerks angeordnet ist, eingehende und an das Mobilfunk-Kommunikationsendgerät adressierte Multimedianachricht an die Umleitungsadresse umgeleitet wird.

2.  Verfahren gemäß Anspruch 1, bei dem die Umleitungs-Anforderungsnachricht von dem Mobilfunk-Kommunikationsendgerät an eine Multimedianachricht-Relaiseinrichtung übertragen wird.

3.  Verfahren gemäß Anspruch 2, bei dem die Umleitungs-Anforderungsnachricht von einer User Agent-Einheit in dem Mobilfunk-Kommunikationsendgerät generiert wird.

4.  Verfahren gemäß einem der Ansprüche 1 bis 3, bei dem als Umleitungs-Anforderungsnachricht eine GSM-Umleitungs-Anforderungsnachricht oder eine 3GPP-Umleitungs-Anforderungsnachricht, insbesondere eine UMTS-Umleitungs-Anforderungsnachricht verwendet wird.

5.  Verfahren gemäß einem der Ansprüche 1 bis 4,

    • bei dem von der Multimedianachricht-Relaiseinrichtung auf den Empfang der Umleitungs-Anforderungsnachricht hin eine Umleitungs-Bestätigungsnachricht erzeugt wird,
    • bei dem die Umleitungs-Bestätigungsnachricht von der Multimedianachricht-Relaiseinrichtung an das Mobilfunk-Kommunikationsendgerät übertragen wird.

6.  Verfahren gemäß einem der Ansprüche 1 bis 5, bei dem die Umleitungs-Anforderungsnachricht eine Transaktions-Identifikationsangabe enthält.

7.  Verfahren gemäß Anspruch 5 oder 6, bei dem die Umleitungs-Bestätigungsnachricht eine Transaktions-Identifikationsangabe enthält.

8.  Verfahren gemäß Anspruch 5, 6 und 7, bei dem die Umleitungs-Anforderungsnachricht und die Umleitungs-Bestätigungsnachricht die gleiche Transaktions-Identifikationsangabe enthalten.

9.  Verfahren gemäß einem der Ansprüche 1 bis 8, bei dem in der Umleitungs-Anforderungsnachricht zumindest eine der folgenden Informationen enthalten ist:

    • eine Angabe des Nachrichten-Typs, und/oder
    • eine Angabe einer Multimedianachrichten-Schnittstellen-Version, welche von dem Mobilfunk-Kommunikationsendgerät unterstützt wird, und/oder
    • eine die Umleitungsadresse identifizierende Information, und/oder
    • eine Angabe von Bedingungen, gemäß denen die Umleitung durchgeführt werden soll, und/oder
    • eine Angabe, ob ein Zusammenwirken des Multimedianachrichten-Dienstes mit Rufeinstellungen des verwendeten Mobilfunk-Kommunikationsnetzwerkes ermöglicht ist.

10. Verfahren gemäß einem der Ansprüche 1 bis 9, durchgeführt im Rahmen der MM1-Schnittstelle gemäß einem 3GPP- bzw. OMA-Mobilfunk-Kommunikationsstandard.

11. Verfahren gemäß einem der Ansprüche 1 bis 10,
bei dem von dem Mobilfunk-Kommunikationsendgerät eine Umleitungs-Ansicht-Anforderungsnachricht an die Multimedianachricht-Relaiseinrichtung übertragen wird, wobei mit der Umleitungs-Ansicht-Anforderungsnachricht das Übertragen von eingestellten Umleitungsparametern von der Multimedianachricht-Relaiseinrichtung zu dem Mobilfunk-Kommunikationsendgerät beantragt wird.

12. Verfahren gemäß Anspruch 11,

● bei dem von der Multimedianachricht-Relaiseinrichtung auf den Empfang der Umleitungs-Ansicht-Anforderungsnachricht hin eine Umleitungs-Ansicht-Bestätigungsnachricht erzeugt wird,
● bei dem die Umleitungs-Ansicht-Bestätigungsnachricht von der Multimedianachricht-Relaiseinrichtung an das Mobilfunk-Kommunikationsendgerät übertragen wird.

13. Verfahren gemäß Anspruch 12,
bei dem die Umleitungs-Ansicht-Anforderungsnachricht und die Umleitungs-Ansicht-Bestätigungsnachricht die gleiche Transaktions-Identifikationsangabe enthalten.

14. Multimedianachricht-Relaiseinrichtung zum Empfangen und Weiterleiten mindestens einer Multimedianachricht in einem Mobilfunk-Kommunikationsnetzwerk,

● mit einer Empfängereinheit zum Empfangen einer Umleitungs-Anforderungsnachricht, welche von einem Mobilfunk-Kommunikationsendgerät gesendet wurde und mit der eine Umleitung der mindestens einen Multimedianachricht an eine in der Umleitungs-Anforderungsnachricht angegebene Umleitungsadresse beantragt wird,
● mit einer Umleitung-Prüfeinheit, welche eingerichtet ist zum Überprüfen für eine empfangene Multimedianachricht, ob für das in der Multimedianachricht angegebene Ziel-Mobilfunk-Kommunikationsendgerät eine Umleitungsfunktion aktiviert ist, und für den Fall, dass die Umleitungsfunktion aktiviert ist, zum Umleiten der Multimedianachricht an die in der Umleitungs-Anforderungsnachricht angegebene Umleitungsadresse
● wobei die Multimedianachricht-Relaiseinrichtung außerhalb des Mobilfunk-Kommunikationsnetzwerks angeordnet ist.

15. Multimedianachricht-Relaiseinrichtung gemäß Anspruch 14, eingerichtet als Mobilfunk-Multimedianachricht-Relaiseinrichtung.

16. Verfahren zum Umleiten mindestens einer Multimedianachricht in einem Mobilfunk-Kommunikationsnetzwerk,

● bei dem auf den Empfang einer ersten Umleitungs-Anforderungsnachricht, welche von einem Mobilfunk-Kommunikationsendgerät gesendet wurde und mit der eine Umleitung von eingehenden Kommunikationsverbindungs-Anforderungen an eine in der ersten Umleitungs-Anforderungsnachricht angegebene Umleitungsadresse beantragt wird, von einer Zentral-Mobilfunk-Servereinheit eine zweite Umleitungs-Anforderungsnachricht gemäß einem Mobilfunk-Format, welches von einer Multimedianachricht-Relaiseinrichtung verarbeitbar ist, gebildet wird,
● bei dem die zweite Umleitungs-Anforderungsnachricht an eine Multimedianachricht-Relaiseinrichtung, die außerhalb des Mobilfunk-Kommunikationsnetzwerks angeordnet ist, übertragen wird, wobei die zweite Umleitungs-Anforderungsnachricht mindestens eine Angabe der Umleitungsadresse enthält,
● bei dem abhängig von der zweiten Umleitungs-Anforderungsnachricht eine bei der Multimedianachricht-Relaiseinrichtung eingehende und an das Mobilfunk-Kommunikationsendgerät adressierte Multimedianachricht an die Umleitungsadresse umgeleitet wird.

17. Verfahren gemäß Anspruch 16,
bei dem die Multimedianachricht-Relaiseinrichtung die Umleitung der eingehenden Multimedianachricht abhängig von Daten in der zweiten Umleitungs-Anforderungsnachricht durchführt, wobei Multimedianachricht-Dienst-spezifische Regeln berücksichtigt werden.

EP 2 560 330 A2

## FIG 1

Mobilfunknetzbetreiber 104 103 108 107

101 100
MMS
Dienstleistungsanbieter

HLR

110 Gr
MM5

116 115 113 114 109 111 Gc
102

MT — Uu — UTRAN — Iu — SGSN — Gn — GGSN — Gi — MMS Relay/Server

112 106
105

- - - - Signalisierungs-Schnittstelle
——— Signalisierungs- und Datenübertragungs-Schnittstelle

## FIG 2

MMSE
Dienstleistungsanbieter A

MMSE
Dienstleistungsanbieter B

200

201 203 204 205 206 202

MMS
User Agent
A

207
Schnittstelle
MM1

MMS
Relay/Server
A

209
Schnittstelle
MM4

MMS
Relay/Server
B

208
Schnittstelle
MM1

MMS
User Agent
B

FIG 3

Billing System 316

MMS VAS Applications 314

MMS User Databases 312

300

MM8 315

313 MM7

203

MM6 311

309

HLR 310

MMS User Agent A 201

MM1 207

MMS Relay/Server

301 Relay

303 MM2

302 Server

MM5

MM4 209

"Foreign" MMS Relay/Server 205

208 MM1

MMS User Agent B 202

MM3 307 307 307 307

External Server#1 (e.g. E-Mail) 304

External Server#2 (e.g. Fax) 305

External Server#3 (e.g. UMS) 306

External Server#N 308

EP 2 560 330 A2

FIG 4

## FIG 5

## FIG 6

**FIG 7**

Mobilfunknetzbetreiber — 104

- 703 — ②
- 108,310 → HLR
- ① 702
- 701 — 115 — 113 — 114 — 109 — 110 — 111 — Gr — Gc
- MT — Uu — UTRAN — Iu — SGSN — Gn — GGSN
- 112 — 106
- 105 — 704 — Gi

107, 309 — MM5 — ③

MMS Dienstleistungsanbieter — 101
- 705 — ④ — 102,203
- MMS Relay/Server

700

- - - - Signalisierungs-Schnittstelle
——— Signalisierungs- und Datenübertragungs-Schnittstelle

EP 2 560 330 A2

## FIG 8

Signalisierungs-Schnittstelle
----- Signalisierungs- und Datenübertragungs-Schnittstelle

EP 2 560 330 A2

FIG 9

Mobilfunknetzbetreiber A
H-PLMN

108, 310 — HLR

107,309

MMS
Dienstleistungsanbieter

MMS Relay/Server — 102,203

115
Uua

113   114   109   110   111 — Gc
UTRAN — Iu — SGSN — Gn — GGSN
112   106

Gr   MM5

Gi   105

901 — MT

Mobilfunknetzbetreiber B
V-PLMN

108,310 — HLR

MM5

107,309

903

115
Uub

113   114   109   110   111 — Gc
UTRAN — Iu — SGSN — Gn — GGSN
112   106

Gr

Gi   105

----- Signalisierungs-Schnittstelle
—— Signalisierungs- und Datenübertragungs-Schnittstelle

EP 2 560 330 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10117052 A1

**In der Beschreibung aufgeführte Nicht-Patentliteratur**

- RFC 822. *Standard for the format of ARPA Internet Text Messages,* August 1982